# EUROPEAN PATENT APPLICATION

(11) **EP 2 028 793 A1**
(43) Date of publication of application: **25.02.2009**
(21) Application number: 07016381.1
(22) Date of filing: 21.08.2007
(51) Int. Cl.: H04L 12/28, H04L 29/06

(54) **Mediation device and method for adapting a first connection to a second connection in a communication network**

(71) Applicant: Nokia Siemens Networks Oy, 02610 Espoo (FI)
(72) Inventor: Markwart, Christian, 81667 München (DE); Morper, Hans-Jochen, 85253 Erdweg (DE)
(74) Representative: Weidel, Gottfried

(57) **Abstract**

A mediation device (406) for adapting a first connection to a second connection in a telecommunication network is provided, wherein the mediation device (406) comprises a plurality of mediation sub-device (407, 504, 604, 801, 802, 803, 804) and a connection device (807) wherein each of the plurality of mediation sub-devices (407, 504, 604, 801, 802, 803, 804) is adapted to provide a mediation sub-functionality and wherein the connection device (807) is adapted to select at least two mediation sub-devices from the plurality of mediation sub-devices (407, 504, 604, 801, 802, 803, 804) by connecting the selected at least two mediation sub-devices (407, 504, 604, 801, 802, 803, 804) such, that the mediation sub-functionalities of the selected mediation sub-devices (407, 504, 604, 801, 802, 803, 804) are combined. Furthermore, the connection device (604) is adapted to select the at least two mediation sub-devices such, that the combination of the mediation sub-functionalities provides a desired adaptation between the first connection and the second connection.

## Description

### Field of invention

The present invention relates to the field of communication networks. In particular the invention relates to a mediation device for a communication network, a wireless broadband access base station comprising a mediation device, a DSLAM comprising the mediation device, a cable modem termination system comprising the mediation device and a method for adapting a first connection to a second connection in a communication network using the mediation device.

### Art Background

Beginning with the liberalization of the telecommunication market the telecommunication environment is continuously changing. In the past the public telecommunication network was owned by a single incumbent telecommunication network provider and therefore, a service for a user of the telecommunication network was provided by a single telecommunication network operator from end to end. An end to end service or E2E service is a telecommunication service offered by a telecommunication network operator, wherein the service being controlled by the operator from the access of the user or user equipment to the destination, which the user wants to reach or to the application, which the user wants to use.

The whole telecommunication environment for offering end to end services comprises the connection line, the access network, the core network and the applications. No strictly defined border between the access network, the core network and the applications was drawn in the past, since a single telecom operator owned the whole network.

However, after the liberalization of the telecommunication market, different telecommunication network provider or telecommunication companies, which are called alternate carriers or alternative carriers, may provide telecommunication services in addition to the incumbent telecommunication operators. Thus, there may exist some providers, which are specialized to operate a certain part or an extract of a telecommunication network. For example utility supplier or public transport operators have the technical prerequisites in form of telecommunication lines, which may allow them to provide access networks and provide services to end users. In particular, by using the recent developments concerning the wireless access technology, such alternate carrier may own the access to end users, without operating an own core network.

Alternate carriers may compete with the incumbent carriers, since regulations permit the alternate carriers to operate access lines, which directly connect end users to an access network. For example, the digital subscriber line (DSL) technology enables an alternate carrier to offer access services and to operate own access networks.

However, the separation of different parts of a telecommunication network e.g. an access network and a core network, creates new borders between the different networks.

Traffic, which is caused by users of an incumbent network operator, has to be passed over by a third party access network to the core network of this incumbent operator. In the case of new access technologies, convergence of access network and existing core may require new inter-working philosophies.

In particular, for example in the area of wireless broadband access technology, e.g. WiMax or WiBro, the incompatibility of the technologies causes additional effort. Incumbent carriers may have invested in expensive core network technology and thus, they are not very flexible to react if different access technologies have to be connected to the backbone networks.

There may be a need to simplify the connection of two communication networks.

### Summary of the Invention

Thus, a mediation device for adapting a first connection to a second connection in a telecommunication network, a broadband wireless access base station comprising the mediation device, a DSLAM comprising the mediation device, a cable modem termination system (CMTS) comprising the mediation device and a method for adapting a first connection to a second connection in a communication network or telecommunication network using a mediation device is provided.

A mediation device may overcome restrictions and limitations caused by the deployment of different network technologies by different network operators.

In this document, access to a network means the direct connection of a user, end user or host to the network. Access also means the possibility to access a network. An access network may be the part of a communication network, which provides physical access of a user or a device to a communication network. As such the access network may receive user signaling information, payload, traffic, signals or user data from the end user via a direct connection. The part of the network built by the access network is used to transport the user information or device information and/or traffic towards a core network.

Since a plurality of end users or devices are connected to the access network, the traffic of these end users is concentrated, accumulated or multiplexed in the direction towards the core network.

The core network or backbone network may be the part of a communication network, which part of the network is adapted to receive user information or device information from users or devices connected via a plurality of access networks. This part of the network may use the received information in order to derive billing and charging information, authentication and authorization information. This part may also be the part of a network, which is adapted to receive payload traffic from the users or devices and which part is adapted to use the received user information or device information in order to route the traffic and in order to control quality of service adequately.

The backend network may comprise functions that are necessary to administrate user profiles, to validate user data and to provide services. Typical functions of a backend network may be user repository, customer care, operation and maintenance, billing or charging and payment system.

In end-to-end networking scenarios may two roles of operators exist. Thus, two kind of operators may exist, which may reside in one organization or in different organizations, namely access provider and service provider.

The access provider provides physical access to users and devices, while the service provider holds user subscription data. Typically, no user context may be known at the access provider.

An access provider may not want to raise or to administrate end-user subscriptions. However, context data may be transmitted between access provider and service provider allowing the service provider to distinct or to differentiate the user/device behind a session or associated to a session, to perform authentication/authorization and to raise billing information.

Furthermore, the access provider may use this information to control QoS per user/session and to raise accounting data towards the service provider for used access resources without knowing the individual user behind a session or related to a session.

Given the local regulatory assignments of access resources and given the most prevailing local business models access and service may be offered from one hand or by different organization.

Depending on the business model, service providers may operate a complete core and backend network or only a backend network. For example, a large incumbent DSL operator may operate a powerful core while a small ISP will only do the backend functionality. In other words the DSL operator may operates a core network comprising network equipment with a high performance while the ISP may operate network equipment supporting backend functionality.

In the latter case the access provider may handle the core on behalf of the ISP, i.e. the access provider may also provide core functionality.

Service providers, which do not handle core payload may not need to forward the traffic of an user to the service provider's network. In such cases the access network may route the traffic directly to the target network.

An operator, which wants to act as a pure access provider, may have to provide both - access and core - in order to connect to as many service providers as possible, large incumbent operators with own core and many small operators without own core.

In cases where the operator offers applications or end user services, the operator of the core network is called service provider. Dependent on the services offered by the service provider different service provider types are differentiated.

A service provider may be specialized or focused on offering selected services or applications and therefore may not operate a network infrastructure for transporting the traffic.

A connection is used as a general term for describing a function of connecting two end points in a communication network. An end point may be a user, customer or a user terminal on the one hand and a server or a service which is provided on the other hand.

A connection may also be a virtual connection connecting two entities of a layer in the OSI layer model (Open Systems Interconnection Reference Model). In other words, a physical connection, which is a point to point connection between two physical end points may carry a plurality of virtual connections which virtual connections may connect a user with different services offered by one single service provider or offered by different service providers.

The connections or virtual connections may belong to different layers of the OSI layer model and may be differentiated by connections carrying the payload of the end user or control connections carrying signaling information in order to control the network, for example, to setup a connection.

A control connection may be used to identify the user who wants to get access to the network.

IP networks may be widely deployed. IP networks are not exactly compliant with the OSI layer model but IP networks use a similar layered model. IP networks may use an IEEE 802.x layer or MAC (medium access control) layer as the transport layer, an IP (internet protocol) layer as the network layer and a TCP (transmission control protocol) layer as flow control and data integrity layer and e.g HTTP (hypertext transmission protocol) as application layer.

A service provider may be an ISP (Internet service provider), an ASP (application service provider), a DSL service provider or a cable TV (television) service provider. ASP or ISP usually expect IP streams and offer services like Internet access, gaming, access to applications e.g. office programs, music download etc. In addition an ISP or ASP may also expect accounting data, e.g. in the RADIUS format (remote authentication dial in user service).

A DSL service provider may be a service provider, which owns a DSL network. Thus, a DSL service provider may own a broadband access server (BRAS) in order to terminate end user signaling, wherein the users use DSL customer premise equipment (CPE). Since for connecting end users to the BRAS the PPP (point to point protocol) or PPPoE (point to point over Ethernet) protocol is deployed, which protocols are based on layer 2, the network of a DSL operator may be denoted as a layer 2 network. In general any layer 2 based network and in particular any network, which uses layer 2 based controlling information may be denoted as layer 2 network.

Similar a cable TV service provider may be a service provider, which owns a cable TV network and offers network access via the cable TV Service provider's cable network.

Since cable operators may operate their networks on IP level (layer 3) they may not use layer 2 based end-to-end signaling. A common method in order to handle end-to-end signaling in a layer 3 network is to deploy DHCP preferably with option 82. A network running on IP with a DHCP based user verification may be denoted as a layer 3 network.

According to an exemplary embodiment of the present invention a mediation device for adapting a first connection to a second connection in a communication network, in particular in a broadband communication network, is provided. The mediation device comprises a plurality of mediation sub-devices and a connection device. Thus, a plurality of mediation sub-devices is available on the mediation device. A plurality of mediation sub-devices may comprise two or more mediation sub-devices.

Each of the plurality of mediation sub-devices is adapted to provide a corresponding mediation sub-functionality. The connection device which is also comprised by the mediation device, is adapted or configured to select at least two, a group or an extract of mediation sub-devices of the plurality of mediation sub-devices by connecting the at least two mediation sub-devices or the selected group of mediation sub-devices such, that the mediation sub-functionalities of the selected mediation sub-devices are combined. The selection also is made such that the combination of the sub-functionalities builds, provides or delivers a mediation functionality, which mediation functionality can be used by the mediation device. The connection device is further adapted to select the at least two mediation sub-devices or the group of mediation sub-devices from the plurality of mediation sub-devices such, that the combination of the mediation sub-functionalities provides a desired adaptation between the first connection and the second connection.

The selected mediation sub-devices may be different or the selected mediation sub-devices may provide different sub-functionalities.

The kind of mediation sub-devices, which are implemented on the mediation device may depend on the required flexibility for the mediation device.

The mediation device may allow to interconnect a layer 2 and a layer 3 network or to provide access control and layer 2 termination in one single physical device.

According to another exemplary embodiment of the present invention a wireless broadband access (WiMax) base station comprising the mediation device is provided.

According to yet another exemplary embodiment of the present invention a DSLAM comprising the mediation device is provided.

According to a further embodiment of the present invention a cable modem termination system (CMTS) comprising the mediation device is provided.

According to another exemplary embodiment of the present invention a method for adapting a first connection to a second connection in a communication network using a mediation device is provided. The mediation device comprises a plurality of mediation sub-devices and a connection device.

Each of the plurality of mediation sub-devices is adapted to provide a mediation sub-functionality. The method comprises the steps of selecting at least two mediation sub-devices or a group of mediation sub-devices of the plurality of mediation sub-devices by connecting the selected mediation sub-devices or the mediation sub-devices of the selected group such, that the mediation sub-functionalities of the selected mediation sub-devices are combined and selecting the at least two mediation sub-device or the group of mediation sub-devices such, that the combination of the mediation sub-functionalities provides a desired adaptation between the first connection and the second connection.

Selecting the mediation sub-devices, which are available on the mediation device may be seen as a further step for the method.

The term mediation may describe the following aspects of this invention. Mediation may describe the ability or capability of a system to provide and to deploy all necessary functions needed to make a layer n network and a layer m network inter-work by presenting a layer n network as a m-layered network to a layer m networks and vice versa.

Furthermore, the term mediation may describe the ability of a system to combine typical functions or basic functions of network access or network core edge such as service selection, DHCP relay, DHCP client, DHCP server, layer 2 tunneling, BRAS termination etc. in one single physical entity. These combined functions may be administrated per user, per user group, per device, per device group, per service or per service group. Thus, a multitude of different combinations of mediation sub-functionalities may coexist.

Different combinations of functions and/or new groups of functions may be set up by an administration function.

The term mediation may also describe the ability to derive a suitable combination of mediation subsets out of the user traffic and/or user signaling. In other words mediation or mediate may describe, the ability to determine a desired combination for handling the traffic of a user by analyzing the user's traffic or user's signaling information.

A connection or virtual connection may be a main connection transporting a payload or may also be a control connection transporting signaling information.

A mediation sub-device may also be an access sub-device or an adaptation sub-device.

A mediation functionality may be a functionality provided by an access device and providing a certain access strategy. And a mediation functionality may also be an adaptation functionality adapting two connections to each other.

A user may be a person who uses the network. An user may use the network by deploying an end device, a terminal, a customer premise equipment (CPE) or a host, which is connected to the network.

A token, an address, an e-mail address, a credential, a user name or an ID (identifier) and a passport may identify each individual user, terminal, user device or host. A user may also be bound to a group of users if no individual configuration for the user is required. If a configuration for the user is made corresponding to a group, every user, who is a member of the user group, uses the same configuration. Thus, time for configuring the mediation device may be saved.

An access network may connect a plurality of hosts or users to a backbone network by leading a connection from the user via a mediation device to a backbone network. Thus, a mediation device has access to the users' connections and the mediation device, which comprises a plurality of mediation sub-devices, allows to provide an individual access, an individual authentication functionality or an individual access functionality for a certain user and in particular for a certain user connection.

The availability of a plurality of mediation sub-devices on a mediation device, which sub-devices offer the mediation functionality or the access functionality, may allow to select certain mediation sub-devices to combine the mediation sub-devices and to compose an access functionality by the combination of the corresponding mediation sub-functionalities. The composed access functionality may be individual for each user using the access network and asking for permission to be connected to the core network of the service provider. Thus, the access provider may have the possibility to control the access to the access network and the access to the core network.

If a service network and an access network are operated by different operators, e.g. an access provider and a service provider, the access provider may desire to adapt the network traffic and the network signaling to the rules and layering given by the service provider network. This may or may not include layering mediation. In other words, a service provider may define the network layer on which network traffic or signaling information needs to be delivered, in order to connect a network to the service provider's network. Deploying a mediation device may support the connection of these networks.

The mediation device may adapt the access network to the core network. In other words, if the core network provider uses a network infrastructure, which is not flexible concerning connecting to different network technologies and which infrastructure may not be adapted to be connected to the access network technology, the mediation device may convert the access technology or access connection into the core network technology or core network connection such, that the core network operator does not realize that different access technologies may be used.

The access technology used in the access network may be hidden to the service provider. The signaling information and/or the network traffic may be delivered to the service provider network in a format required by the service provider network, independent of the access technology.

If an access provider wants to be connected to a DSL service provider, which may also be an access provider for other service providers, the access provider may deliver an access data stream or a traffic, which data stream or traffic is adapted to a BRAS infrastructure. The BRAS technology or infrastructure may be deployed by the DSL service provider. In other words, the traffic, which is provided by the access provider, may contain information, which can be interpreted by a BRAS.

If an access provider wants to be connected to a cable service provider, the access provider may deliver an access data stream, which data stream is adapted to an IP technology with DHCP technology. In other words, the traffic, which is provided by the access provider, may have the format of the IP protocol or DHCP protocol wherein the DHCP protocol may be on top of the IP protocol.

It may be seen as a gist of the present invention that a mediation device adapts an access network, in particular a WiMax access network or a broadband wireless access network, to a legacy service provider network. The mediation device may provide a functionality to flexibly adapt the network of an access provider to the network of a service provider, which networks are incompatible from a technological point of view. The access network and the service network may operate on different layers of the OSI network model.

Such a mediation device may be adapted to deliver the functionality on the network layer required to control the network. In other words, the mediation device may allow to transfer the traffic of the access provider to the service provider in the case that both networks operate on the same network layer. But the mediation device may also be adapted to convert traffic of different network layers used by the access network and the core network, and at the same time to provide a desired combination of access functionalities or core edge functionalities as described above.

The possibility to adapt a traffic coming from a predefined network layer of an access network to a traffic in the core network, required by the service provider, may make the access provider flexible in terms of offering services. The access network provider may be flexible concerning to which network type the access provider connects the access provider's network. And thus, the access provider may have the choice to which service provider the access provider offers services to.

A DSL service provider may be a service provider, which operates a DSL network and owns customers. Some of the DSL service provider's users may not be directly connected to the DSL network. For example, if users are located in an area of a city, which cannot be reached by the DSL service provider or if users are located in a rural area, to which the DSL service provider does not have access, the DSL operator connects users to the DSL network, which users are provided by a third party access network provider. Such a third party access provider may deploy an access technology, which differs from the technology deployed in the DSL service provider's network. For example a third party access provider may operate a cable TV network or a WiMax broadband wireless access network based on the IEEE 802.16 standard.

In other words, a DSL operator may act as a service provider for the users, which are owned and connected by this DSL operator. The DSL operator may also connect third party access networks to the DSL operator's network in order to reach users connected to the third party access network. These users otherwise may not be able to be connected by a broadband access.

However, the DSL operator or DSL service provider may also be an access provider for an other service provider. The DSL operator may connect the access network owned by the DSL operator to the network of the other service provider in order to provide access services to the other service provider. The other service provider may not have an infrastructure in place to connect customers directly or may not own the last mile access to a user and thus, uses the access services offered by the DSL provider.

The aforementioned examples were described on the basis of a DSL operator, but the same requirements may also appear for a cable TV operator or any other service provider.

The question of how to connect to the network of a service provider in particular may arise if new access technologies are implemented. For example the broadband wireless access technology WiMax may be used to connect users in areas where the users cannot be connected via the DSL technology or via the cable TV technology. Since the WiMax technology may not be a typical network operator technology or carrier grade technology, difficulties may arise if the WiMax technology has to be connected to a core network of a service provider, e.g. an incumbent carrier or a third party service provider.

The access provider then may adapt the network owned by the access provider to the core network on a protocol layer, logical layer or transport layer in order to be compatible with the core network. Many different access technologies and some different core technologies exist. Thus, a mediation device may allow an access provider or a WiMax operator to adapt to existing core networks, core network technologies, core network philosophies or core network functionalities.

In the following further exemplary embodiments of the mediation device will be described. These embodiments apply also for the WiMax base station comprising the mediation device, the DSLAM comprising the mediation device, the cable modem termination system (CMTS) comprising the mediation device and the method for adapting a first connection to a second connection in a telecommunication network using a mediation device.

According to an exemplary embodiment of the present invention each mediation sub-device of the plurality of mediation sub-devices is selected from the group of mediation sub-devices consisting of a high layer controlling device, a low layer controlling device, a high-/low-layer inter-working device, a broadband remote access server, an AAA server, an L2TP (layer 2 tunnel protocol) access concentrator (LAC), a DHCP relay (dynamic host configuration protocol), an access gateway, a service selection gateway, a RADIUS (remote authentication dial in user service) proxy and a web server.

Thus, a combination of access functionality and adaptation functionality may be provided.

According to another exemplary embodiment of the present invention the mediation device is adapted such, that the mediation device is able to configure the adaptation between the first connection and the second connection dependent on a profile of a user, a profile of a device or a profile of a group of a user and a device.

According to the OSI network layer model or the TCP/IP network layer model, network protocols relate to end-to-end connections, while transport protocols relate to point-to-point connections. Point-to-point connections are low layer connections. Since an end-to-end connection concerns logical end points, a layer 3 or a high layer connection may be independent of the physical network technology, which lies underneath such a high layer connection.

A low layer connection may use a low layer protocol e.g. IEEE 802.x, Ethernet, ATM (asynchronous transfer mode), IEEE 802.16 etc.

A high layer connection may be routed through a network using different physical networks, which may deploy different physical telecommunication infrastructures.

Dependent on the type of a network, the network control may happen on different layers. For example, the user may use a first control connection on layer 3, whereas the service provider infrastructure may use a second control connection on layer 2. For example, the user may use the DHCP protocol for requesting access to the network, for signaling and communicating authentication and authorization information or credentials. In this case the mediation device may perform an adaptation between the user's control connection on layer 3 and the service provider's control connection on layer 2. Additionally, there may exist the requirement to provide an access functionality dependent on the user profile.

In other words, the user may use a DHCP signal or message and the service provider may use a PPP (point-to-point protocol) control message for user identification. The mediation device then converts the layer 3 DHCP control message or control command into a layer 2 PPP command and vice versa.

In another case, the user may use a PPP layer 2 control command and the service provider network may use a DHCP layer 3 command. Thus, the mediation device converts the layer 2 PPP commands into the DHCP layer 3 commands.

The conversion performed by the mediation device may be not a one-to-one conversion. This specific mediation function is supposed to be stateful. I.e. in one direction the mediation function translates DHCP requests of a user or device connected on layer 3 into PPP setup messages and the mediation device translates PPPoE IP addresses into DHCP accept messages in the other direction.

In yet another case, a user may use the first control connection, which lies on the same layer than the second control connection. Thus, commands belonging to the same type of protocol are exchanged and no adaptation may have to be performed inside the mediation device.

In other words, if the user uses for instance a PPP authentication or a PPP layer 2 control connection and the service provider requires a PPP control connection as well, the mediation device may pass the command of the first connection sent by the end user, which command is received by the mediation device, to the second connection, provided by the service provider.

Similar, in the case that the end user and the service provider use the same protocol on layer 3, e.g. DHCP, no conversion may have to be performed by the mediation device.

Due to the capability of the mediation device to adapt a first control connection to a second control connection, a mediation device may provide a flexible adaptation between an access network operated by an access network provider and a core network operated by a service provider.

However, even if no mediation between the first control connection and the second control connection is required, the mediation device may perform the authentication sub-functionality in accordance to the profile of an end user. The mediation device may provide a portal page or a forced portal page or a service selection gateway functionality, in order to identify the end user and to control the access of the user to the network.

According to one aspect of the invention, the mediation device may act as a BRAS and terminate PPP connections of a user or of a device for a certain type of user, e.g. a user connected on layer 2. The mediation device may also act as a DHCP server for users connected on layer 3. In addition the mediation device may also include a AAA server and a databases, which both allow the termination of a connection from a user. Thus, user or device authentication may be carried out in the same mediation device.

Furthermore, the mediation device or the mediation function may deploy service selection and force users to use a portal page on which portal page users may select different services. Users may be forced to use a portal page by portal redirection. This portal redirection may be applicable for BRAS PPP terminated user connections as well as for DHCP IP based connections. Thus, the same look and feel may be provided to users regardless of which layer the access network works on.

Many other authentication functionalities may be implemented to identify the user and to allow the user to access the service provider's network.

If the access provider uses a single network infrastructure and the service provider also uses a single network infrastructure only a single predefined adaptation functionality may be required between two connections. One of the two connections may be established across the infrastructure of the access service provider and the other connection of the two connections may be established across the infrastructure owned by the service provider.

One connection may be a high layer connection, while the other connection may be a low layer connection. If the two connections are predetermined and no flexibility is required, the mediation device may comprise the high layer controlling device, the low layer controlling device and the high-/low-layer inter-working device, in order to provide an inter-working sub functionality between the two connections.

However, if many different user access strategies or access scenarios have to be provided by the mediation device at the same time and in order to offer a high flexibility, the mediation device may comprise as much mediation sub-devices as possible. If many mediation sub-devices exist in a mediation device, many combinations of mediation sub-devices may be selected by the connection device. I.e., the more sub-devices may be implemented on the mediation device, the more different user access scenarios may be offered by a service provider using the mediation device and the more flexible the access provider may react to different requirements in the access network.

According to another exemplary embodiment of the present invention the mediation device comprises a first interface, wherein the first interface comprises the first connection and wherein the adaptation between the first connection and the second connection depends on the type of the first network, which is connected to the first interface.

A connection may depend on the user, using the connection. Thus, the adaptation may be made dependent on a user basis or a connection basis and may not consider the technology of the network connected to the mediation device.

However, a user may use a plurality of connections to different services and thus, for each of the plurality of services a decision may have to be made about the kind of adaptation which has to be performed. By handling each single connection separately the processing power required in the mediation device may have to be increased.

An interface may describe the physical properties of the terminal or plug of a device. An interface may also describe the type of logical connections on different network layers. Thus, having knowledge about the interface may provide information about the type of the network connected to the mediation device and the kind of logical connections on different network layers. Therefore, the first interface may identify the access network and thus, maybe not every single connection has to be analyzed and the access strategy may not have to be applied separately for every single connection comprised on the interface.

Furthermore, the mediation device may recognize automatically the interface and may automatically determine the required adaptation between the first connection and the second connection. Thus, no external configuration of the type of conversion maybe required and the mediation device may be used as a plug and play device.

According to another exemplary embodiment of the present invention the mediation device further comprises a second interface, wherein the second interface comprises the second connection and wherein the adaptation between the first connection and the second connection depends on the type of the second network, connected to the second interface.

Making the adaptation dependent on the type of the second interface may allow to convert the information or the signals received on the first interface to the second interface on an interface level and not only on a connection level.

In the case that no user specified access functionality has to be provided by the mediation device, the received information may be handled on a global basis and as a complete data stream. Thus, the conversion of the information received on a connection of the first interface into the information for a connection, comprised on the second interface, may be accelerated.

The handling on a connection level may be performed by the service provider, the network of which service provider is connected to the second interface. In the case that an adaptation between the first interface and the second interface is made and thus, an adaptation on the relevant connections on the first interface and on the second interface is made, the mediation device may be transparent for the service provider.

According to another exemplary embodiment of the present invention the mediation device comprises a programmable connection device.

Since there may exist a plurality of mediation sub-devices on the mediation device, the required mediation sub-devices in order to provide the required user specific access functionality may need to be selected. The selection may be made by a connection device, which connects the required mediation sub-devices, wherein the selected mediation sub-devices combine their sub-functionalities in order to provide the required access functionality.

For example, if the end user uses a public WiFi access network and thus, the user is not known by the network and the service provider, a limited access may be provided, which limited access allows the service provider to ask for some additional user-specific information. For such an inquiry, a forced portal page may be provided, on which forced portal page the user can provide some user-specific identifiers. The forced portal page may be one sub-functionality of a mediation sub-device. Examples for identifiers are a credit card number, a mobile phone number or an address. Based upon the provided identifier the service provider or the access provider may provide access to the service provider's network and the service provider may bill the end user for the services used by the end user. The access may happen on layer 3 by providing an IP address and controlling a firewall or an access gateway.

Another possibility to provide access for an end user to a service provider network via a mediation device may be to tunnel a PPP connection to the service provider. For this tunneling the L2TP tunnel protocol may be used and the mediation device may act as a local access concentrator LAC.

Furthermore access may be provided for different end users by terminating connections of the different users on the mediation device. For example, a mediation sub-functionality or sub-device implementing a broadband remote access server, installed locally (local BRAS) on the mediation device may be used for such a termination. Thus, the mediation device may decide whether a user, has to be handled locally or if the user, in particular the traffic of the user, has to be diverted to a service provider. A user may have to be handled locally if the user is a visitor. If the user is diverted to the service provider, the user may be identified by the service provider.

The programmable connection device may allow to flexibly react to such different access scenarios and to handle inquiries of the user individually. The programmable connection device may react on demand to an actual user requirement.

According to another aspect of the present invention the mediation device comprises a connection controller device. The connection controller device is adapted to determine the profile of the user and the connection controller device is also adapted to control the selection of the group of mediation devices depending on the determined profile of the user/device or user profile/device profile.

The user profile may be selected by a credential, a user name and password, an IP address a DHCP option 82, or a MAC (medium access control) address.

A connection controller device may provide a flexible access to a core network. The user may send some identification information to the mediation device, in particular to the connection controller device. This information may be used by the connection controller device to select the relevant mediation sub-devices, which are required to offer an appropriate access functionality for the relevant user. The required sub-devices may be stored in a database on the mediation device related to users/devices, user groups or device groups.

After identifying the required sub-devices, the connection controller device instructs the connection device to select the required mediation sub-devices by establishing a connection between the relevant sub-devices. For example, if a user requests a layer 3 access functionality using the DHCP protocol, the connection controller device detects the DHCP protocol and selects a mediation sub-device for terminating the DHCP connection.

In an example the selected terminating device is the high layer controlling sub-device, if the connection controller device recognizes DHCP information in the connection coming from the user. The connection controller device in addition instructs the connection device to connect the high-/low-layer inter-working device. If the service provider network uses a layer 2 control protocol, the connection controller device further instructs the connection device to connect the high-/low-layer inter-working device and the low layer controlling device.

In the aforementioned example the low layer controlling device may be a device, which handles a PPP connection. Furthermore, the connection controller device may also recognize that the identification of the user has to be made by a portal page and thus, the connection controller devices also connects a service selection gateway mediation sub-device of the mediation device in order to provide a log-in portal page and identification portal page.

According to another exemplary embodiment of the present invention the connection device is a hardwire connection.

A hardwire connection is a direct connection line, a wire, a circuit path or a conductor path. By using a hardwire connection to connect the required mediation sub-devices may not require to identify the user profile and may allow a simple combination of required mediation sub-devices. Therefore, the performance of the mediation device may be increased.

According to another embodiment of the present invention the connection device is adapted to maintain a plurality of different selections of groups of mediation sub-devices at the same time.

By being able to maintain a plurality of different selections of mediation sub-devices may allow the mediation device to support a plurality of users/devices at the same time. Furthermore, the mediation device may be able to provide different access functionalities or access strategies. The access functionalities may depend on a service provider selected by the user or the access functionality may depend on a certain user or group of users or on a device or groups of devices.

One possible access scenario offered by a service provider may be to provide different quality of service (QoS) levels to different users since different users may pay a different amount of money for a service. Providing different bandwidth to different users may regulate the QoS. Thus, a mediation sub-functionality regulating the bandwidth may be selected.

Another possible access scenario may be supporting mobile users, which are temporarily connected to the service provider's network and not registered or not subscribed to the service provider's network. In contrast to fixed connected users having a dedicated access line, mobile users may be able to log into a wireless access network as soon as they receive a signal sent by a base station. For such mobile users a user group profile may be configured in order to allow them to access the network even if they are not permanently subscribed to the network and to handle mobile users in the same way.

In parallel to the mobile user access scenario there may also exist an access scenario for users connected by a dedicated line to the access network. For example users connected via DSL or via cable TV network use a dedicated line and may request a certain type of service.

The handling of these different kinds of users may be different. A mobile user may have to be identified in order to ensure that the services used by the mobile user are billed, while a fixed connected user, may have to be identified in order to provide the services the fixed connected user has already paid for.

In order to handle different kind of access strategies with one single mediation device the connection device may select the different groups of mediation sub-devices to offer the relevant access strategy for the different kinds of users.

According to another exemplary embodiment of the present invention a mediation device comprises a first interface module, wherein the first interface module comprises the first interface.

Using an interface module may make the mediation device flexible in terms of providing different interfaces by changing the interface module. The interface module may provide the functionality of terminating a connection, which connection reaches the mediation device via the first interface. Therefore, on the interface module a protocol stack may be implemented for terminating the corresponding connection. Changing the interface module of the mediation device may adapt the mediation device to different types of access networks, in particular to different types of connections.

According to a further embodiment of the present invention the mediation device comprises a second interface module wherein the second interface module comprises the second interface and similar to the first interface, the second interface module provides the flexibility for the mediation device to react to different service provider network technologies, which have to be connected to the mediation device.

According to another exemplary embodiment of the present invention the mediation device further comprises a database device, wherein the database device is adapted to provide an information for each of the plurality of mediation sub-devices.

Each mediation sub-device may require information stored in the database in order to provide the required access sub-functionality or mediation sub-functionality. For example in the database user data is stored allowing identifying an user and determining the type of access, which has to be provided for this certain user in accordance with the user's user profile.

According to another exemplary embodiment of the present invention the mediation device further comprises an administration device wherein the administration device is adapted to provide administrational access to the mediation device.

By using an administration device an administrator may access the mediation for configuring the mediation device. Via the administration device the administrator may configure the mediation sub-devices, which need to be connected by the connection device in order to provide a user/device specific access functionality. The administration device may be a configuration interface, which uses the XML (extended mark-up language) programming language.

According to a further exemplary embodiment of the present invention the mediation device further comprises an operation-and-maintenance device. The operation-and-maintenance device is adapted to provide an operation and maintenance functionality of the mediation device.

By an operation-and-maintenance device an administrator may receive alarming information and performance measurement data from the mediation device. The operation-and-maintenance device may be an element manager. An element manager may provide network management functionality, for example on the basis of SNMP (simple network management protocol). In a SNMP environment the element manager may be installed on the mediation device and may produce trap signals for an umbrella network management system like HP OpenView.

According to another exemplary embodiment of the present invention the mediation device is adapted to handle a range of 1 to 1 million user profiles.

The number of user profiles, which may be handled by the mediation device simultaneously determines the scalability of the mediation device. Providing mediation devices, which may support different ranges of users may allow a service provider to adapt the performance of the mediation device to the number of users, which are expected to use the network. Therefore, mediation devices may exist, which support 1 to 1.000 users, 1 to 10.000 users or 1 to 100.000 users in order to support different sized networks.

The range of supported users may also determine the size of the mediation device concerning the physical size or the controlling and processing power as well as physical embodiments ranging from one single device to clusters. Thus, access operators, which support a small number of customers may need a smaller mediation device than access providers which connect a large amount of users to their access network.

According to yet another exemplary embodiment of the present invention the plurality of mediation sub-devices comprise the high layer controlling device, the lower layer controlling device, the high-/low-layer inter-working device, the broadband remote access server, the AAA server, the L2TP access concentrator, the DHCP relay, the access gateway, the service selection gateway, the RADIUS proxy and the web server.

Having all these mediation sub-devices implemented on a single mediation device may give a high flexibility for an access provider in terms of supporting different access functionalities, since the connection device may be able to select a group of mediation sub-devices out of the plurality of the implemented mediation sub-devices.

According to another exemplary embodiment of the present invention the plurality of mediation sub-devices comprises the high layer controlling device, the low layer controlling device and the high-/low-layer inter-working device.

Since only the high layer controlling device, the low layer controlling device and the high-/low-layer inter-working device are implemented on the mediation device, the mediation device may be usable in access scenarios, wherein only a single predefined access network has to be adapted to a single predefined core or backbone network. The reduced functionality may increase the performance of the mediation device.

The high layer controlling device is adapted to terminate a high layer control connection and the low layer controlling device is adapted to terminate a low layer control connection. The high layer control connection is a control connection, which uses commands of a higher network layer than the low layer control connection. The high-/low-layer inter-working device is adapted to convert commands used in the high layer control connection into commands used in the low layer control connection and vice versa.

According to another exemplary embodiment of the present invention the conversion between the high layer control connection and the low layer control connection is a mapping of high layer control commands to low layer control command.

The mapping may be performed in the high-/low-layer inter-working device.

Since the high layer controlling device may terminate the high layer control connection, the high layer controlling device may have access to the high layer control command, which is sent in the high layer control connection.

The high layer controlling device may send the high layer control command to the high-/low-layer inter-working device. The high-/low-layer inter-working device recognizes the command of the high layer control connection and may map this command to the relevant low layer control command. The low layer control command may be sent over the low layer control connection to the service provider network.

In other words, an adaptation between the high layer control connection and the low layer control connection may be realized by terminating the high layer control connection in the high layer controlling device, mapping a set of high layer control commands into a corresponding set of low layer control commands using the high-/low-layer inter-working device and sending the low layer control commands to the service provider via the low layer control connection.

According to another exemplary embodiment of the present invention the high layer control connection is a layer 3 control connection.

An example for a layer 3 control connection may be an IP based connection using DHCP commands, which are encapsulated in the IP connection.

According to another exemplary embodiment of the present invention the low layer control connection is a layer 2 control connection.

An example for a layer 2 control connection may be an Ethernet connection using PPPoE commands, which are encapsulated in the Ethernet connection. The PPPoE commands may be interpreted by a BRAS, which interacts with a AAA server by using RADIUS signals.

According to another exemplary embodiment of the present invention the high layer control connection is a DHCP connection.

According to another exemplary embodiment of the present invention the low layer control connection is a PPPoE connection.

According to another exemplary embodiment of the present invention the mediation device comprises a single chassis.

This single chassis encloses all the devices which are comprised by the mediation device. Thus, a compact mediation device may be built, which may fit into a communication rack. A communication rack or central office rack is a rack which has a size of 19" (19-inch rack). A 19-inch rack is a standardized (EIA 310-D, IEC 60297 and DIN 41494 SC48D) system for mounting various electronic modules in a "stack", or rack, 19 inches (482.6 mm) wide. Equipment designed to be placed in a rack is typically described as rack-mount, a rack mounted system, a rack mount chassis, subrack or shelf.

These and other aspects of the present invention will become apparent from and elucidated with reference to the embodiments described hereinafter.

Exemplary embodiments of the present invention will be described in the following, with reference to the following drawings.

### Brief Description of the Drawings

Fig. 1 shows a DSL network structure for a better understanding of the present invention.
Fig. 2 shows a WiMax forum architecture for a better understanding of the present invention.
Fig. 3 shows a WiMax and DSL deployment for a better understanding of the present invention.
Fig. 4 shows a mediation device using a BRAS sub-functionality according to an exemplary embodiment of the present invention.
Fig. 5 shows a mediation device using a LAC sub-functionality according to an exemplary embodiment of the present invention.
Fig. 6 shows a mediation device using a DHCP relay sub-functionality according to an exemplary embodiment of the present invention.
Fig. 7 shows a mediation device connecting one single user to three different service providers at the same time according to an exemplary embodiment of the present invention.
Fig. 8 shows a mediation device comprising different mediation sub-functionalities according to an exemplary embodiment of the present invention.
Fig. 9 shows a mediation device connecting a low layer and a high layer network to access network to a low layer and high layer service provider network.
Fig. 10 shows a mediation device converting between a high layer protocol and a low layer protocol according to an exemplary embodiment of the present invention.

### Detailed Description

The illustration in the drawings is schematic. In different drawings, similar or identical elements are provided with the same reference numerals.

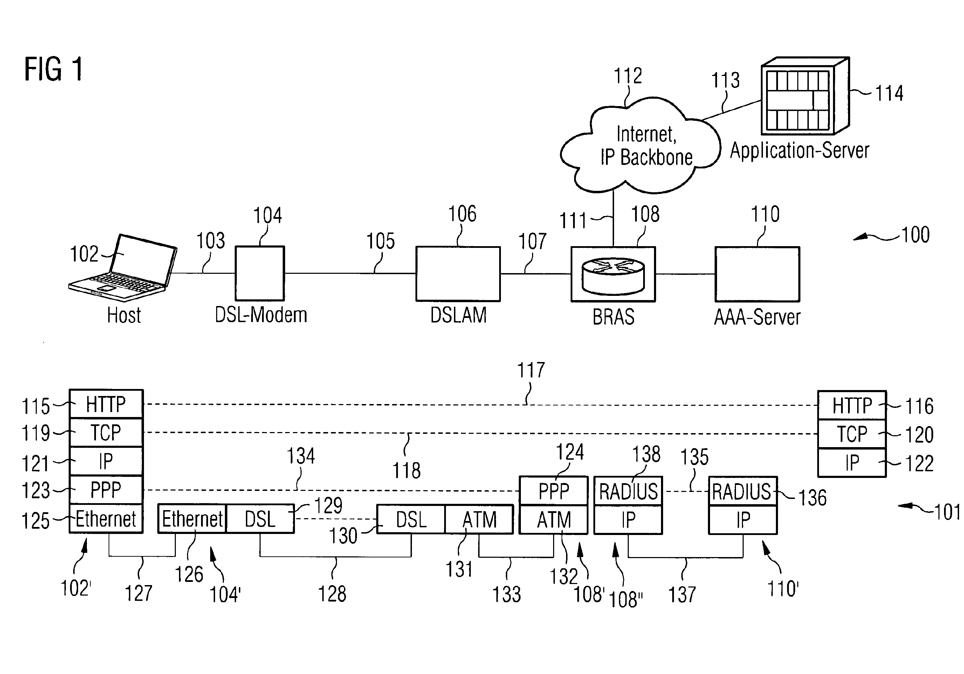

Fig. 1 shows a DSL network configuration for a better understanding of the present invention. The figure shows the network configuration 100 or network topology 100 and the corresponding protocol diagram 101. The host 102, user equipment 102, user terminal 102 or end user 102 is connected via a direct line 103 to a DSL modem 104 or DSL router 104. Since the protocol running on the direct line 103 in Fig. 1 is based on the Ethernet protocol, the line 103 is also called an Ethernet line 103.

The DSL modem 104 is connected to a DSLAM 106 (Digital Subscriber Line Access Multiplexer) via a telephone line 105, a dedicated line 105, DSL line 105 or a fixed line 105. The DSLAM 106 is connected via an ATM line 107 to a broadband remote access server 108. The broadband remote access server (BRAS) 108 is connected to an AAA server 110 or triple-A server 110 via the IP link 109 using the RADIUS protocol. The AAA (authentication, authorization, accounting ) server 110 is used for authentication, authorization and accounting of an user 102. The IP link 109 may also be the Internet 112 or any other IP backbone network 112.

The BRAS 108 is connected to the Internet 112 or to any other IP backbone 112 using a line 111 or a link 111, which may be an Ethernet link 111. The IP backbone 112 is connected via the Ethernet link 113 to an application server 114. Thus, a connection from the host 102 via line 103, the DSL modem 104, the DSL line 105, the DSLAM 106, the ATM line 107 to the BRAS 108 and via line 111, via the Internet 112 and via the Ethernet line 113 to the application server 114 can be established.

In the protocol diagram 101 or protocol stack diagram 101, the relevant protocol stacks relating to the relevant devices of the network topology plan 100 are depicted. The protocol stack 102', which is used in the host deploys the HTTP protocol (Hypertext Transfer Protocol) at layer 5 for a HTTP connection 117. The HTTP protocol connects the associated HTTP layer of the application server 116. Thus, between the HTTP layer 115 of the host 102 and the HTTP layer 116 of the application server an HTTP connection 117 can be established. I.e. between HTTP layer 115 of the host 102 and HTTP layer 116 of the application server 114, HTTP messages are exchanged.

At layer 4 of the protocol stack 102' a TCP (Transmission Control Protocol) connection 118 is established between the TCP layer 119 of the host 102 and the TCP layer 120 of the application server 114.

Furthermore on layer 3 an IP (Internet Protocol) connection between the IP layer 121 of the host 102 and the IP layer 122 of the application server114 is established. The connection between the IP layer 121 of the host and the IP layer of the application server 122 is called a layer 3 connection. The TCP connection 118 is called a layer 4 connection and the HTTP connection 117 is called a layer 5 connection.

The IP connection, the TCP connection 118, and the HTTP connection 117 are called high layer connections.

For the transport of the IP information from the protocol stack 102' of the host 102 to the protocol stack 108' of the BRAS a PPP connection 134 is established. The PPP layer 123 of the host is terminated on the PPP layer of the BRAS 124.

As can be seen in Fig. 1 on the so called lower layer 123, 125 on the host, the Ethernet layer 125 is the start point of a connection based on the Ethernet protocol. This Ethernet connection 127 is terminated at the Ethernet layer 126 of the DSL modem 104.

Inside the DSL modem 104 the Ethernet connection is converted to a DSL connection 128, based on the DSL standard. The DSL connection 128 starts at the start point 129 and ends at the DSL layer 130 of the DSLAM 106.

Inside the DSLAM 106 the DSL transport protocol 129, 130 is converted to the ATM transport protocol 131, which ATM protocol is terminated on the BRAS 108 in the BRAS's protocol stack 108' on the corresponding ATM (asynchronous transfer mode) layer 132. Inside the BRAS 108 the ATM connection 133 is terminated as well as the PPP connection 134. The PPP connection 134 starts at the PPP layer 123 inside the host 102 and terminates inside the BRAS 108 at PPP layer 124. The PPP connection 134 can be used for the transport of IP messages belonging to the IP connection 121, 122.

The BRAS 108 controls the access to the IP Backbone 112 by using the point-to-point protocol layer 123, 124, which can be encapsulated in the Ethernet connection 127, the DSL connection 128 and the ATM connection 133. The PPP connection 134 is terminated in the BRAS 108. As part of the PPP connection setup an authentication is carried out. During the authentication user credentials are transmitted in the setup messages which credentials are verified by a AAA server at BRAS side. A PPP connection can be considered as being set up and running when authentication has been completed successfully.

For controlling the access to the IP backbone 112 the BRAS 108 requests authentication, authorization and accounting data for a user from the AAA server 110, which is connected via the IP connection 109.

For connecting the AAA server 110 on the BRAS 108 a second protocol stack 108'' exists. This second protocol stack 108'' has a RADIUS layer 138, which establishes a RADIUS connection 135 to the RADIUS layer 136 of the protocol stack 110' located on the AAA server 110. Inside the AAA server 110 the RADIUS connection 135 is terminated by the RADIUS layer 136.

The RADIUS connection 138 is using an IP connection, which again uses an Ethernet connection 137. The BRAS requests access for the user 102 to the IP backbone 112 from the AAA server, which AAA server will verify user credentials with a user profile or user context, which is stored in a database. The BRAS 108 receives the credentials from the user 102. Once the user authentication was successful the host 102 receives an IP address from the AAA server 110 and the BRAS connects the host 102 to the IP backbone 112 and the host 102 has access to e.g. a web page on the application server 114 using the HTTP protocol 117.

The BRAS 108 may allow the access to the Internet 112 and in particular to an application server 114 by e.g. unlocking a port on a firewall or on an access gateway. As long as the user 102 does not have the authorization to access the Internet 112, IP backbone 112 or any application 114 the BRAS 108 is blocking traffic coming from the host 102 and flowing in the direction towards the application server 114.

The DSL modem 104 may also have router functionality and in addition the DSL modem is implemented as an access router, wherein the PPP termination 123 is not made on the host 102 but on the DSL modem 104 on the protocol stack 104'. User credentials in such a scenario are semi-permanently stored in the DSL modem 104. Thus, the modem 104 or access router 104 sets up or establishes a DSL connection, such that the host does not realize any DSL relation and any PPP connection. If the DSL/PPP functionality is implemented in the DSL modem, the host 102 sends IP packets 121 directly to the DSL modem 104 over the Ethernet connection 127, without using any PPP connection. Thus, the connection from the DSL modem to the BRAS is transparent for the host. Transparent in this context means that the host 102 uses a standard Ethernet connection to send the IP packets towards the service provider backbone.

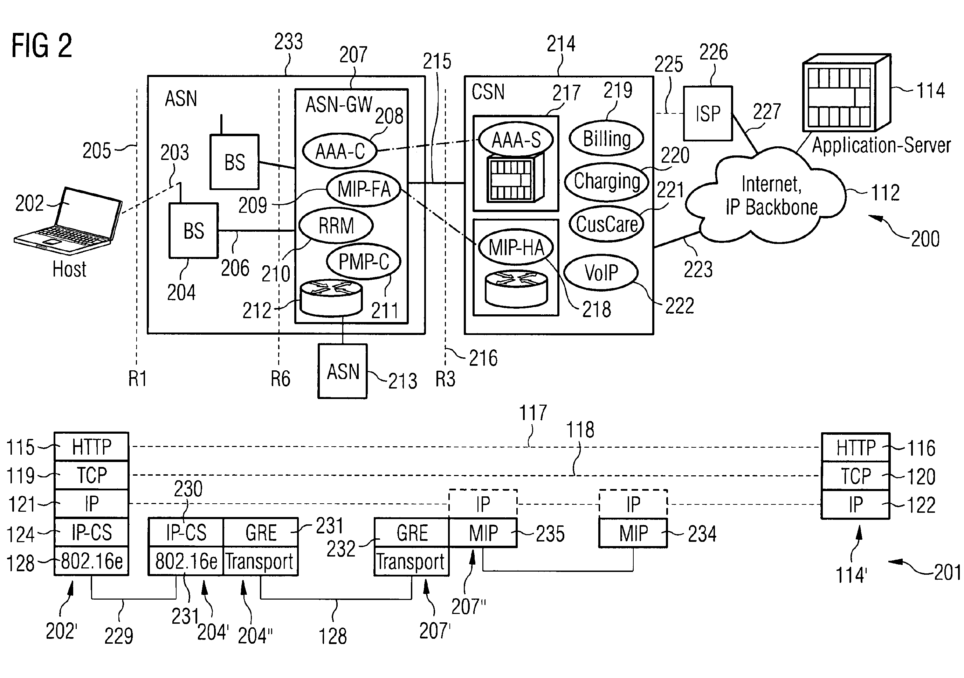

Fig. 2 shows a WiMax forum architecture for better understanding of the present invention.

In the Fig. 2 the network topology 200 and the protocol diagram 201 for a WiMax forum architecture is shown. The host 202 or end user equipment 202 is connected via the wireless connection 203 to the base station 204. The interface between the host 202 and the base station 204 is the R1 interface 205 or R1 reference point 205. The base station 204 is connected via a fixed line 206 to the access serving network gateway (ASN-GW) 207. The ASN-GW 207 comprises an AAA-C (AAA client) client function 208, a mobile IP foreign agent (MIP-FA) 209, a RRM (radio resource management) 210, a proxy mobile IP client (PMIP-C) 211 and a router 212, which may be connected to another ASN 213

The interface between the base station 204 and the ASN-GW 207 is the R6 interface or R6 reference point. The ASN gateway 207 is connected to the connectivity serving network (CSN) 214 via connection 215. The connection between the ASN-GW 207 and the CSN 214 is described as reference point R3 216. The AAA-C 208 and the AAA-S (AAA-server) 217 are connected via connection 215 and the MIP-FA 209 is connected to the MIP-HA (mobile IP home agent) 218. The CSN 214 further comprises the billing functionality 219, charging functionality 220, customer care functionality 221 and voice over IP functionality 222.

The CSN is connected to the Internet 112 or IP backbone 112 via the connection 223 and via connection 225, wherein connection 225 is comparable to connection 111 in Figure 1.

Referring now to the protocol diagram 201. The higher layer protocols 115, 119 and 121 of the protocol stack 202' inside the wireless host 202 are similar to those depicted in Fig. 1.

Instead of using a PPP connection 123 the IP protocol layer 121 directly sits on top of an IP convergence layer (IP-CS) 224. The IP convergence layer 224 again sits on the physical MAC layer 228, which uses the IEEE 802.16e protocol. The WiMax host 202 is connected to the base station 204 via the R1 interface 205. In the protocol diagram 201 the R1 interface 205 is represented by line 229.

The base station 204 terminates the IP convergence layer 224 with termination end point 230 and the physical wireless connection 229 with end point 231 in the protocol stack 204'. The radio interface represented by the protocol layers 228 and 231 is based on the IEEE standard 802.16e.

In the configuration of Fig. 2 no PPP connection is required.

The second protocol stack 204'' in the base station 204 encapsulates the IP information 121, received by the base station 204, into a GRE tunnel (generic routing encapsulation) protocol, in order to transport the IP information 121 inside the GRE tunnel.

The IP information 121 can be handed over to the IP convergence layer 224, which transports the IP information 121 to the base station.

The IP convergence layer provides IP sensitivity to the air interface. I.e. the air interface is always informed about the QoS needs of an IP connection.

The IEEE 802.16e radio bearer is sensitive towards any IP layered information e.g. type of service (TOS) bits, which are used for quality of service (QoS), i.e. the IP payload can be accessed in the IEEE 802.16e layer. Thus, direct IP transport is possible with such a configuration.

At the base station 204 the radio specific transport overhead of the transport protocol 228 may be removed or dismantled and the payload can be extracted. The payload, the IP information or IP packets are converted in the base station 204 into GRE packets using the GRE layer 231. The GRE packets can be transported from the base station 204 to the ASN gateway 207 over the connection 206.

For the conversion of the IP payload into GRE packets, in the base station the second protocol stack 204'' is used. The IP payload is transported over the GRE tunnel together with associated signaling information to the ASN-GW 207. In the ASN-GW 207 a protocol stack 207' is implemented, which terminates the GRE tunnel 232.

The ASN-GW 207 is a gateway, which provides radio resource management functions (RRM). The ASN-GW 207 also provides the MIP-FA foreign agent (209) and the proxy mobile IP client (proxy-MIP, PMIP-C) 211. The ASN-gateway PMIP-functionality 207 is used to avoid mobile IP client software on the host 202 since the ASN gateway 207 implements the client-MIP functionality and the ASN gateway 207 sets up the GRE tunnels to the base station.

The client MIP functionality is provided by the ASN-GW 207. The ASN-GW 207 sets up the GRE tunnels to the base station (BS) 207'. Using the GRE tunnel between the BS 204 and ASN gateway 207 allow to use the MIP based mobility as macro mobility.

The ASN gateway 207 uses a second protocol stack 207'', which comprises an IP layer and a MIP layer 235, 234.

The ASN gateway 207 is connected to the CSN 214 using the MIP protocol 235. The MIP protocol 235 is used for macro mobility (ASN 207 to ASN 213).

The micro mobility, which is an intra ASN mobility, can be handled e.g. by PMIP 211 or GRE 206. The base station 204 and the ASN gateway 207 build the access serving network (ASN) 233.

The MIP protocol layer 234 terminates the MIP layer 235 in the CSN (connectivity serving network) 214. Thus, the CSN 214 can use the pure IP information from the IP layer 121 including the higher layer connections 115, 119, which are transported over the IP backbone to the application server 114.

On the application server 114 the protocol stack 114' is implemented and terminates the corresponding higher layer connections 115, 119, 121.

The ASN-GW 207 comprises an AAA-client (AAA-C) functionality in order to perform authentication, authorization and accounting for the host 202 or user 202. The PMIP-C 211 and the MIP-FA 209 in the ASN-GW 207 have a corresponding mobile IP home agent (MIP-HA 218). The AAA-C 208 client has a corresponding AAA-server (AAA-S) 217. The AAA-S server 217 and the MIP-HA 218 are comprised by the CSN-domain 214.

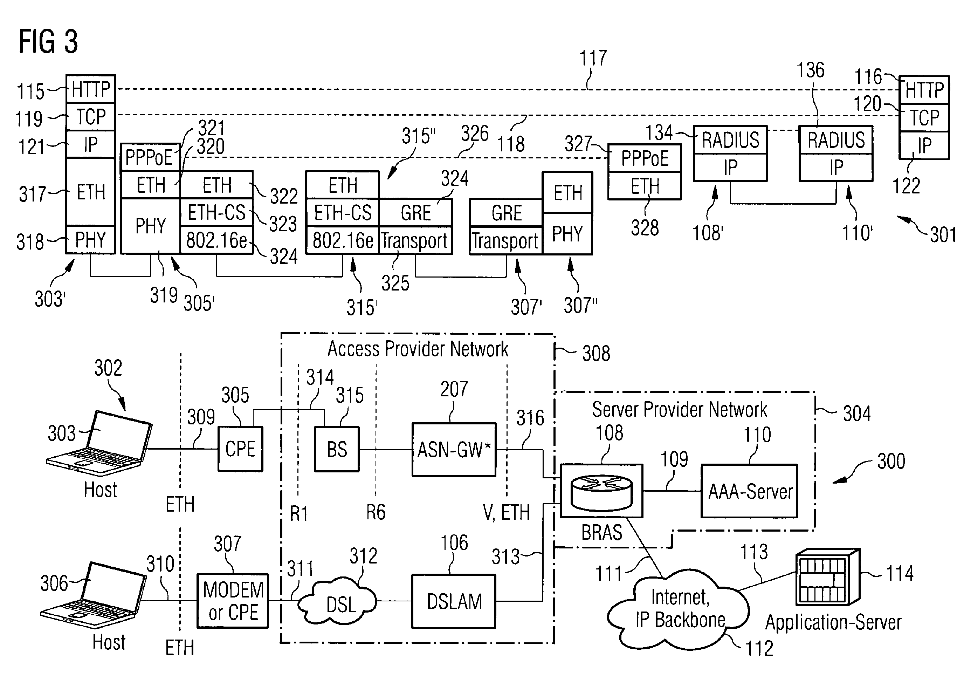

Fig. 3 shows a WiMax and DSL deployment for a better understanding of the present invention. Fig. 3 shows the network topology 300 and the corresponding protocol stack diagram 301 of a WiMax and DSL deployment. The network topology 300 in Fig. 3 is divided into three areas.

The area 302 is the user side. The user side 302 or host side 302 is the area of the network where the host and the customer premise equipment (CPE) are located. The user location for example is the home area location of the user. In Fig. 3 two different kinds of users or hosts are depicted.

A first user 303 is a user who wants to get access to a service provider network 304 by using a CPE based on wireless technology 305.

The second user 306 wants to get access to the same service provider network 304 by using a modem 307, CPE 307 or DSL modem 307, which may be located in a different location than user 303.

The scenario 300 shows that maybe different requirements to an access provider network 308 exist, since users may use different access technologies 305, 307. The hosts 303 and 306 are connected to their CPE 305, 307 via an Ethernet connection 309, 310. In the case of the DSL user 306 the DSL modem 307 is connected via telephone line 311 to the DSL network 312 of the access service provider, which is operating the access provider network 308. For terminating the DSL traffic as described in Fig. 1 the access network provider operates a DSLAM 106. The DSLAM 106 is connected to the DSL network 312 and the DSLAM 106 collects the traffic from a plurality of hosts 306 and sends a concentrated traffic stream to the BRAS 108 of the service provider network 304 via line 313.

The end user 303, who is using a wireless CPE 305 uses a wireless connection 314 to get access to the access provider network 308 by connecting to the base station 315 of the access provider. The wireless connection 314 is described by the reference point R1. The base station 315 is connected to the ASN-GW 207, which is operated by the access service provider. The connection between base station 315 and ASN-GW 207 is described by reference point R6. The ASN-GW 207 provides an Ethernet connection 316 which can be used to connect to the BRAS 313 of the service provider. The reference point V describes the connection 316.

The BRAS 108 is connected to the Internet 112 or IP backbone 112, which may be operated by the service provider or by a different service provider. For the connection of the BRAS 108 to the IP backbone 112 the Ethernet connection 111 is used. A service provider uses for user authentication the connection 109 and the AAA-server 110 as described in Fig. 1. Via the connection 111 the IP backbone 112 and via the connection 113 the users 303, 306 get access to the application server 114.

The protocol representation 301 of the network 300 represents the connection of the host 303 to the application server 114. The protocol stack 303' used by the end user equipment 303 shows the typical TCP/IP protocol stack wherein the higher layers 115, 119, 121 are the typical HTTP layer 115, TCP layer 119 and IP layer 121. These higher layers 115, 119, 121 use the Ethernet layer 317 and the physical layer 318 to be connected to the CPE 305.

The CPE 305 implements the protocol stack 305' comprising a physical layer 319 and the Ethernet layer 320. Thus, the CPE 305 terminates the physical layer 318, 319 and the Ethernet layer 317, 320 and encapsulates the received information in the PPPoE layer 321, i.e. into data packets with a PPPoE framing. These PPPoE packets produced in layer 321 are sent via the wireless connection 314 using the Ethernet layer 322, the Ethernet convergence layer 323 and the MAC layer 324, which is an IEEE 802.16e layer. Instead of using an IEEE 802.16e with an Ethernet convergence layer 323 the CPE may also use the IEEE 802.16d protocol.

The headers of the data packets received by the base station 314 are removed by the protocol stack 315' and the payload is encapsulated by the protocol stack 315'' comprising the GRE layer 324 and the transport layer 325 in order to transmit the PPPoE packets via an GRE tunnel to the ASN-GW 307. The protocol stack 307' of the ASN-GW removes the headers of the information received by the GRE tunnel and encapsulates the payload again in the Ethernet protocol used by the link 316 between ASN-GW 307 and BRAS 108. For the encapsulation on the ASN-GW 307 the protocol stack 307'' is implemented.

The PPPoE connection 326 is terminated in the BRAS 108 by the PPPoE layer 327 and by the Ethernet layer 328. The authentication is made by the AAA-server 110 as described in Fig. 1. Once the user is authenticated, the payload 115, 119, 121 or the IP packet is transferred to the application server 114. The application server 114 implements the HTTP layer 116 in order to terminate the HTTP connection 117, the TCP layer 120 terminates the TCP connection 118 and the IP layer 122 terminates the IP layer 121.

In other words, in Fig. 3 a configuration is shown how a DSL user 306 is connected to a service provider 304 or a service provider network 304 by a BRAS 108. Fig. 3 also shows how a mobile user 303 is connected to the BRAS 108 using a WiMax network or WiMax infrastructure comprising CPE 305, a base station 315 and an ASN gateway 207.

Since many service provider may use a BRAS 108, a service provider asks an access provider to provide in the DSL case as well as the WiMax case a PPPoE connection 326 and to provide a PPPoE layer 377 for authentication and connection control. If this requirement is fulfilled, the service provider network or core network is agnostic or transparent to the transmission technology, which is used in the access network 308 or access provider network 308.

Since the BRAS 108 performs the authentication based on the PPPoE protocol 327, this scenario requires that Ethernet frames 322 are transported over the R1 interface 314.

However, depending on the technical layout of an access system CPE 305 and BS 315 Ethernet convergence (ETH CS 323) may not be implemented on CPE 305 and BS 315. However, only IP-convergence may be implemented and thus, the Ethernet framing may not be transported via the R1 interface 314.

According to the WiMax forum standardization it should be possible to build systems where also the R6 interface is transparent to the IP-CS layer 224, 230 or the ETH-CS layer 323. Thus, a base station 315, 204 is able to either provide Ethernet convergence or IP convergence per host/user 303, 306, 202, 102. And the ASN-GW provides the R3 reference point 216 or R3 interface 216 based on IP 215 or the ASN-GW provides a V reference point or V interface, e.g. based on Ethernet as shown as connection 316, for further connectivity.

Ethernet convergence and IP convergence may be used on one base station. The base station may be able to relay transport packets in a GRE tunnel to a gateway regardless of the structure of the transport packet.

In cases, in which no IP-CS layer or ETH-CS layer is implemented or in cases where vendors or equipment supplier use a proprietary R6 interface or R6 reference point, access providers, which want to connect their access provider networks 308 to a service provider network 304 need to adapt their access provider networks 308 to the service provider network.

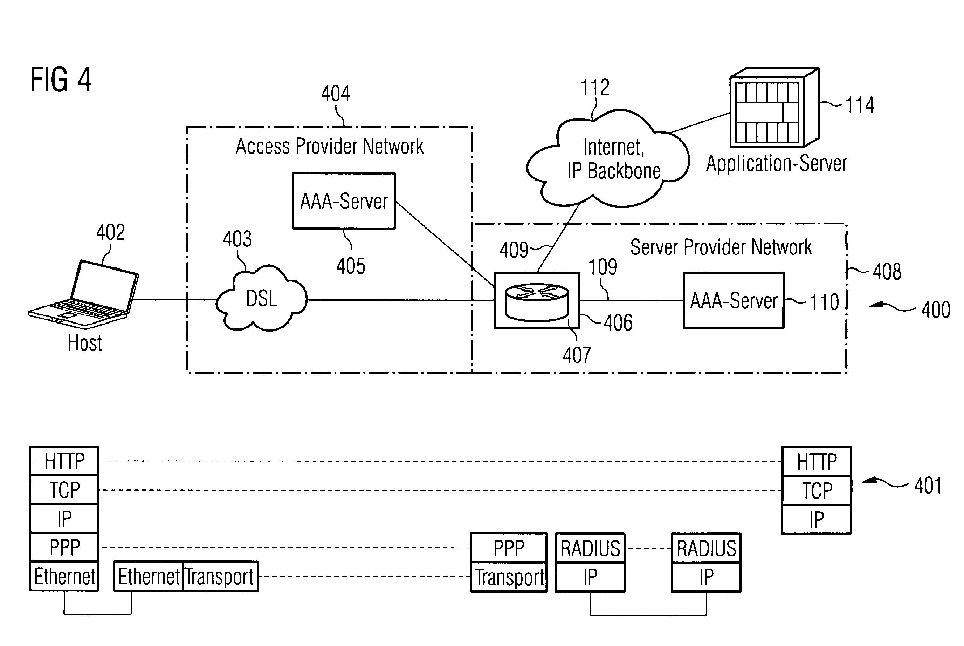

Fig. 4 shows a mediation device 406 using a BRAS sub-functionality 407 according to an exemplary embodiment of the present invention. Fig. 4 shows a network topology 400 and the corresponding protocol stack diagram 401 of a DSL network scenario. A DSL user 402 is connected to the DSL network 403 of the access provider 404. Since the access provider maintains a local AAA-server 405 and a mediation device 406, which implements BRAS sub-functionality 407 the IP backbone 112 can directly be connected to the mediation device 406 using line 409.

The end user 402 gets access to the application server 114 via the DSL network 403, via the mediation device 406 and via the Internet backbone 112. The service provider 408 receives via connection 109 RADIUS information for the AAA-server 110. The service provider 408, e.g. an Internet service provider (ISP) 408 is only interested in receiving accounting and authentication data via the connection 109. Tasks like traffic shaping and access provisioning are handled by the access provider. The access provider 404 or access provider network 404 is able to provide network services to a service provider 408 or service provider network 408 such, that the service provider does not need an own access network infrastructure. For the description of protocol stack 401 reference is made to protocol stack 101 described in Fig. 1.

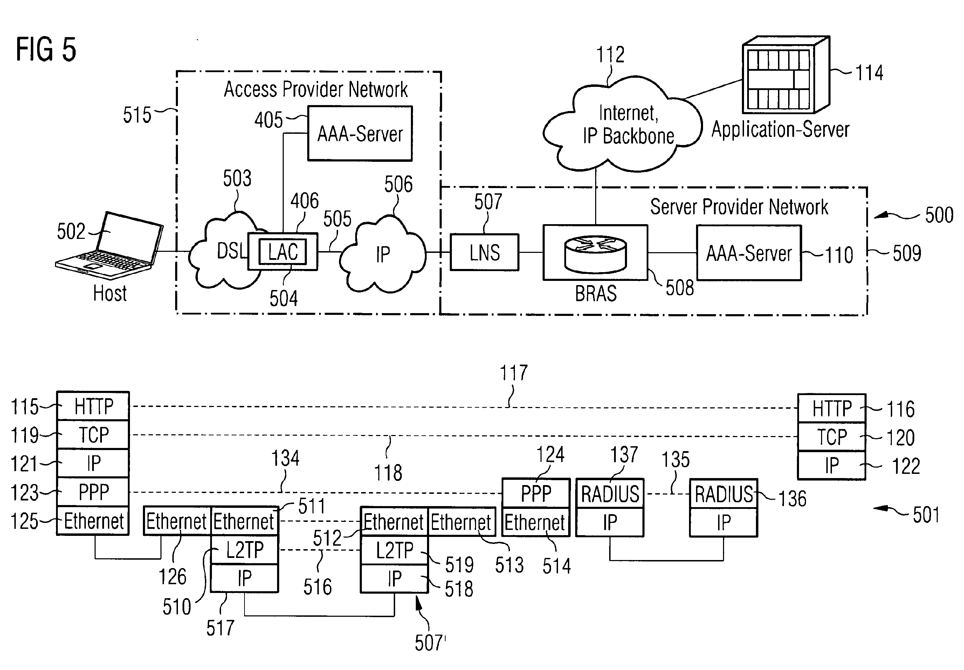

Fig. 5 shows a mediation device 406 using LAC sub-functionality 504 according to an exemplary embodiment of the present invention. Fig. 5 shows another possibility how a DSL user 502 can access an application server 114. Fig. 5 shows the network topology 500 and the corresponding protocol diagram 501. As described in Fig. 1 the host 502 is connected to the DSL network 503. The mediation device 406 in this case uses the LAC sub-functionality 504 to encapsulate Ethernet information, which the mediation device 406 receives from the host 502 and encapsulates the Ethernet frames using the LAC mediation sub-functionality 504 in order to transfer the received information over the connection line 505 to the BRAS 508 of the service provider 509.

The local AAA-server 405 may be an external device or may also be integrated in the mediation device 406. The local AAA-server 405 is used in order to find the target BRAS, which will terminate the PPP sessions. Additionally, some PPP connections may also be terminated in the mediation device 406.

In addition the local AAA server 405 may also be used for authentication and authorization purposes. The encapsulated tunnel information is using the IP network 506 and is transferred to the LNS (L2TP network server) 507, which is operated by the service provider 509 operating the service provider network 509. Since the Ethernet frames containing the PPP information 123 are tunneled to the LNS 507 the BRAS 508 can be used for authentication and authorization. The BRAS 508 is connected to the LNS 507. Authentication and authorization can be made by the service provider in the service provider network 509 using the AAA-server 110. Once the user 502 has been authenticated and authorized to use services from the application server 114, the BRAS 508 of the service provider transfers the traffic to the IP backbone 112 and to the application server 114.

As can be seen in the protocol diagram 501, by using the L2TP tunneling protocol 510 in the mediation device 406 the Ethernet information 511 can be transferred to the LNS 507, which uses the LNS protocol stack 507'. The PPP information 124 is transferred from the LNS to the BRAS 508 via Ethernet connection 512, 513, 514. The PPP information 124 or the PPP layer 124 can be used by the BRAS 508 to access the AAA-server 110 using the RADIUS protocol 137, 135, 136. If the user is authenticated the high layer information 115, 119, 121 is transferred to the application server 114 and received on the network layer 122, TCP layer 120, HTTP layer 116 of the application server 114.

In other words, the traffic received by the access provider network 515 is tunneled to the service provider network 509. Thus, the access provider network 515 may be operated by a different operator or different carrier than the service provider network 509. The operator of the service provider network 509 may be an Internet service provider (ISP). The ISP in that case wants to be the owner of the backbone network and determine the network behavior, network configuration e.g. the quality of service of the service provider network 509. Allocating a certain amount of bandwidth to a user associated to a certain user profile may influence the quality of service provided to the user.

The service provider, operating the service provider network 509, handles and charges the traffic or payload flow.

In order to allow the traffic forwarding to a third party network 509 or a service provider network 509, the access provider uses the mediation device 406 running a LAC sub-functionality 504. The LAC sub-functionality 504 or LAC sub-device 504 encapsulates the Ethernet traffic received by a host 502 into a L2TP tunnel 516. Using L2TP tunnels 516 allows to transfer information in an Ethernet format 511, 512 to be transferred over a layer 3 network e.g. an IP network or an IP connection 517, 518. Since the Ethernet framing or layer 2 framing is not changed while the Ethernet traffic 511, 512 is transferred over the IP network 506, the PPP framing 123, 124 can be used in the BRAS 508.

The end point address of the L2TP tunnel 516 across the IP network 506 is received by the LAC sub-device 504 from the AAA-server 405 and may depend on the user profile of the host 502. The tunnel end point 519 is an IP address in the IP network 506. The L2TP tunnel 516 is terminated in the LNS 507 of the service provider, wherein the LNS may be integrated in the BRAS 508.

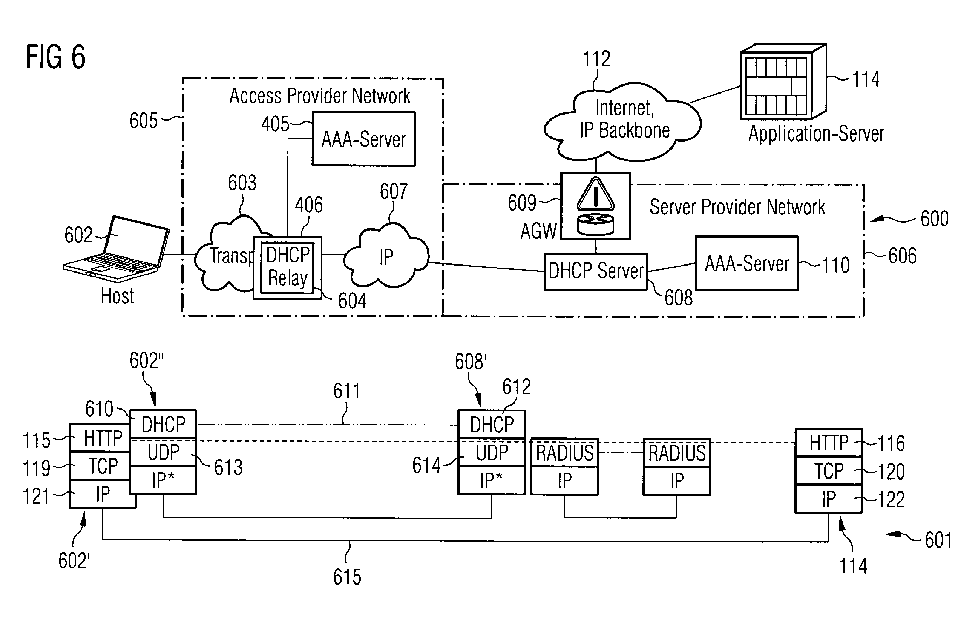

Fig. 6 shows a mediation device 406 using the mediation sub-functionality of DHCP relay 604 according to an exemplary embodiment of the present invention. Fig. 6 shows an access scenario of a cable TV provider 600 and a corresponding protocol diagram 601. A user 602 of the cable TV access network 605 is connected to a transport network 603. The cable network 603 is operated by the access service provider. The connection from the access provider network 605 to the service provider network 606 is made by using the IP network 607. The IP network 607 is connected to the cable transport network 603 by the mediation device 406, which has implemented the mediation sub-functionality 604 of a DHCP relay.

In the service provider network 606 the IP network 607 is connected to a DHCP server 608. The DHCP server 608 is connected to the AAA-server 110. The AAA-server 110 is used for the authorization and authentication of the end user traffic. As long as the end user 602 is not authenticated, the AGW 609 locks traffic coming from the host 602 to the application server 114 via the IP backbone 112. If the host 602 is identified by the AAA-server 110, the access gateway (AGW) 609 let the traffic pass from the host 602 into the IP backbone 112 and allows access to the application server 114. The AGW may be realized as a controlled firewall, which is controlled by the AAA-server 110.

As can be seen from the protocol diagram 601, the cable TV scenario 600 does not require a specific layer 2 protocol, layer 2 authentication, PPP layer authentication or layer 2 control. The access is controlled by allocating an IP address to the host, which IP address allows the host to access the application server and to pass the AGW 609. Thus, for getting access a layer 3 control connection is used.

The host 602 does not have an IP address when the host is started. For getting an IP address stack 602'' is used for establishing control connections in order to receive an IP address for the main connection between the host 602 and application server 114. In the protocol stack 602'' a DHCP (dynamic host configuration protocol) layer 610 requests a layer 3 control connection 611 or DHCP control connection to the DHCP server 608, which has implemented the protocol stack 608'. The DHCP control connection 611 is terminated on the DHCP server 608 at the DHCP layer 612. For the transport of the DHCP messages or protocol elements a UDP (user datagram protocol) connection 613, 614 is used.

Since the host 602 does not have a source IP address the host uses a broadcast IP address, which is indicated as IP*. In typical local area networks (LAN) a corresponding DHCP server 608 replies to a DHCP request coming from the host with a DHCP accept message. The DHCP accept message assigns a temporary IP address to the host. The assigned temporary IP address can be used to pass the AGW 609 and to connect to the application server 114.

As can be seen from the protocol diagram 601 for accessing the application server the protocol stack 602' comprising the HTTP layer 115, the TCP layer 119 and the IP layer 121 is terminated on the application server with the associated protocol stack 114' comprising the HTTP layer 116, the TCP layer 120 and the IP layer 122. The end-to-end IP connection 615 passes the transport network 603, the mediation device 406, the IP network 607, the DHCP server 608, the AGW 609, the IP backbone 112 and reaches the application server 114.

The DHCP relay sub-functionality 604, which is implemented and selected on the mediation device 406 discontinues or interferes the DHCP connection and adds a specific user credential into the DHCP message, which message is exchanged via DHCP connection 611. This added or inserted credential may use the DHCP option 82. After the insertion of the DHCP option 82, the DHCP message is sent to the remote DHCP server 608. For example, the credential may be a worldwide unique MAC address for example of a cable modem.

The credential, which is inserted in the DHCP request, can be detected by the DHCP server and can be used to identify the user 602 and in particular the user profile of the user 602 in the AAA-server 110. If the user 602 is identified and the credential is validated by the AAA-server 110 the DHCP server 608 assigns an IP address, which can be used on the connection 615 to access the application server. The DHCP server 608 controls the access gateway (AGW) 609 such, that the assigned IP address is passed through the AGW 609. The assigned IP address may also be used by the AAA-server 110 in order to create accounting message for the host 602.

The deployment of DHCP as a control connection may replace the identification on a layer 2 level. Thus the DHCP access mechanism allows a simple access to a service provider network.

In the end an IP connection 615 between host 602 and application server 114 is established.

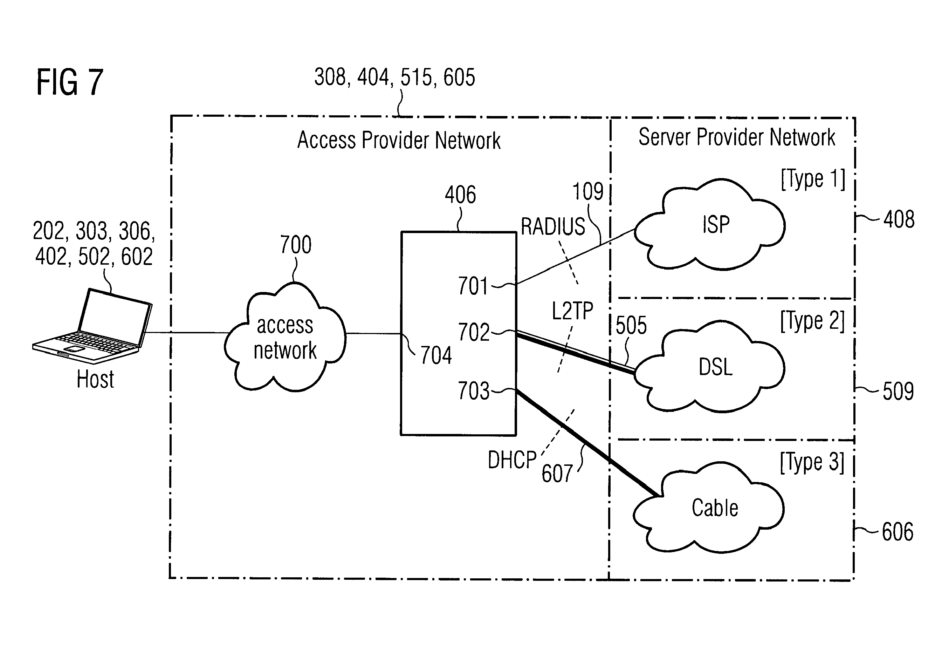

Fig. 7 shows a mediation device 604 connecting a user 202, 303, 306, 402, 502, 602 to three different service provider networks 408, 509, 606 at the same time according to an exemplary embodiment of the present invention. In order to be competitive an access provider may have to support different access technologies to allow different hosts 202, 303, 306, 402, 502, 602 to access the access network 308, 404, 515, 605, 700.

For example a host 202 using a wireless access module inside the host 202, a host using a wireless CPE 305 or a host 306 using a DSL modem 307 may have to be connected to the access network 308, 404, 515, 605, 700. Simultaneously a host 402, 502 using a PPP connection and a host 602 using a DHCP connection may have to be connected to the access provider network 308, 404, 515, 605, 700. Thus, the access network 308, 404, 515, 605, 700 may be a DSL network, an IP network or a WiMax network. These different access networks 308, 404, 515, 605, 700 may have to be connected to service provider networks 408, 509, 606.

Also the service provider network may be of different types. For example type 1 408 is a service provider network, wherein the service provider only wants to receive accounting information and the traffic has to be handled at the access provider. This network of type 1 408 needs a RADIUS 109 information in order to account and bill the customer.

In another case of a service provider network, e.g. type 2 509, the service provider needs to receive a PPP connection in order to perform the authentication of the user. The service provider, which operates a service provider network of type 2 509 needs to receive an L2TP 505 tunnel in order to handle the traffic of the host correctly.

Furthermore, in the case of service provider network of type 3 606 in Fig. 7 the service provider can only handle IP traffic in order to identify the relevant host. The service provider which operates the service provider network of type 3 606 expects DHCP connections 607 in order to handle the data correctly.

The mediation device 406 gives an access provider the flexibility to connect different kinds of hosts 202, 303, 306, 402, 502 and 602 to different service provider networks 408, 509, 606. The mediation device 406 or access control mediation box (ACMB) 406 allows to convert traffic received by the host into a format required by the relevant service provider network 408, 509, 606.

If the host 202, 303, 306, 402, 502, 602 does not use the protocol, which is required to access a service provider network, the mediation device 406 allows to adapt a connection received by the host 202, 303, 306, 402, 502, 602 via the access network 700 to the relevant format required by the service provider. The mediation device 406 enables the access network 700 either to terminate traffic paths received from the access network 700 and map the received control information to a new connection, which connection is initiated by the mediation device 406 and which connection can be handled by the required service provider.

The mediation device 406 also allows making the traffic routing dependent on the result of authentication and authorization requests to an AAA-server.

Furthermore, the mediation device 406 allows to route traffic locally within the access provider network if no connection to a service provider is required. The mediation device 406 further allows to route traffic to a service provider network 408, 509, 606 only in the case that the traffic cannot be handled locally.

The mediation device 406 also allows to only route the complete traffic received by the access network 700 to a certain service provider 408, 509, 606, without performing any extra functionality, e.g. authentication.

The mediation device 406 also allows deciding if the traffic and/or signaling information has to be diverted to a service provider network 408, 509, 606.

The decision about the kind of mediation sub-functionalities used in the mediation device 406 may base on a user profile, a device profile, a user group profile or a device group profile of the hosts 202, 303, 306, 402, 502, 602, which profiles may be stored in the databases of the ACMB.

Thus, any kind of host, which is connected through the access network 700, can be served by any type of service provider network 408, 509, 606, e.g. an ISP service provider network 408, a DSL service provider network 509 or a cable TV provider network 606.

The mediation device 406 comprises a plurality of mediation sub-functionalities. Dependent on the user profile or the network scenario either a certain network access can be provided as an access protocol, a traffic flow or a message flow can be adapted or mediated by the mediation device. At the same time many different connections from one or a plurality of hosts 202, 303, 306, 402, 502, 602 to one or a plurality of service providers 408, 509, 606 can be supported by the mediation device 406. All possible mediation sub-functionalities may be implemented on one single mediation device 406, even if in some cases of the access scenarios not all of the mediation sub-devices are required.

By using a mediation device 406 the access provider network is transparent or agnostic to the different kinds of service provider networks 408, 509, 606. Thus, many different access networks 700 can be connected to different service provider networks 408, 509, 606.

In particular the mediation device 406 performs different functions. For example the mediation device 406 allows L2 tunneling of traffic, act as LAC, perform DHCP relay with option 82 feed in, act as a RADIUS proxy for ISP interconnect, hold functions of AAA for L2TP end point derivation, act as a BRAS for local PPP termination, and act as an AGW for authentication based routing. Any combination of these functions may be performed at the same time, e.g. BRAS and AGW.

Since the mediation device 406 is able to adapt different access technologies to different service provider networks, by using a mediation device 406 different kinds of WiMax access networks can be connected to service provider networks 408, 509 and 606. The mediation device 404 allows to hide access-specific functions, e.g. a wireless R1 interface, to the service provider network 408, 509, 606. Therefore, the service provider does not have to implement specific inter-working functions. The service provider may have invested in a BRAS 108 functionality, and thus, the service provider network can still use the BRAS 108 infrastructure even if an access network 308, 404, 515, 605, 700 does not support the required function to be connected to a BRAS 108.

A mediation device 406 may handle 1.000 users up to a million users at the same time. Also different networks and network types 408, 509, 606 can be supported at the same time. In order to connect two different network types the mediation device has different interfaces 701, 702, 703, which can be connected to a service provider network. These interfaces 701, 702, 703 may be implemented as a module in order to make them exchangeable. Also the connection to a certain kind of access network can be made by an interface 704 which also be implemented as module.

The mediation device 406 may also be integrated in any kind of access network device, for example in a DSLAM 106, a base station 204, in particular a WiMax base station 204, or a cable TV concentrator.

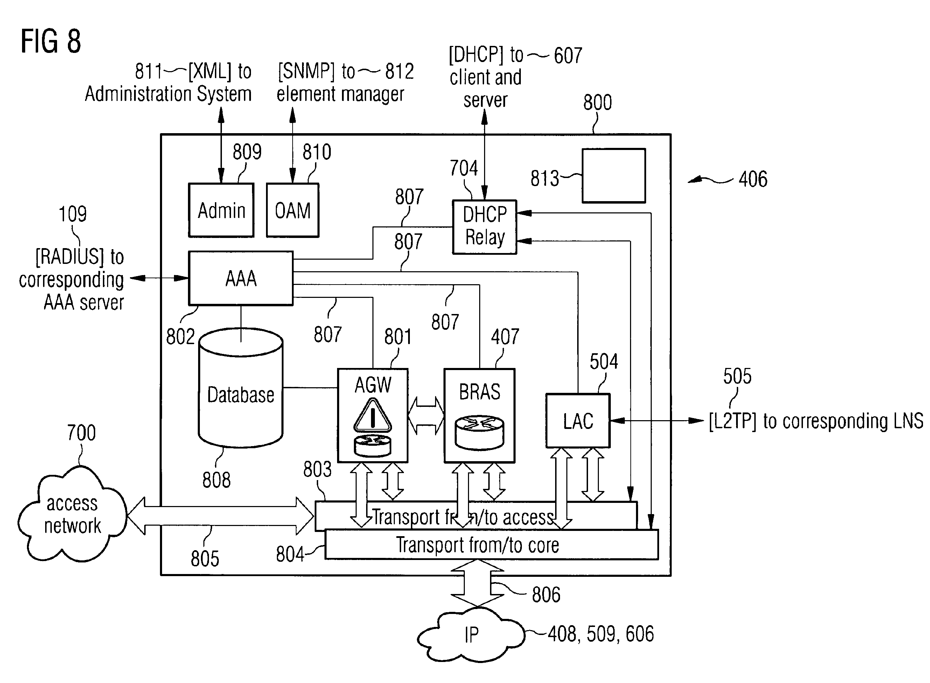

Fig. 8 shows a mediation device 406 or ACMB 406 comprising different mediation sub-devices 407, 504, 604, 801, 802 according to an exemplary embodiment of the present invention. The mediation device 406 shown in Fig. 8 has a single chassis 800. This chassis comprises the DHCP relay sub-device 604, the LAC sub-device 504 and the BRAS sub-device 407. Furthermore, the mediation device 406 comprises an AGW 801, which also is implemented as a sub-device 801 and an AAA-server 802 which can be used for local user authentication, authorization and accounting.

Furthermore, the mediation device 406 comprises the low layer controlling device 803 which is adapted to terminate a layer control connection or layer 2 connection received by the access network 700. The mediation device 406 also comprises the high layer controlling device 804, which is adapted to terminate a layer 3 control connection or a layer 3 connection. The low layer controlling device 803 is connected to the access network via interface 805 comprising a first connection and the high layer controlling device 804 is connected to the service provider network via interface 806 comprising a second connection.

The inter-working between the low layer controlling device 803 and the high layer controlling device 804 is controlled by the high-/low-layer inter-working device, which is not shown in Fig. 8. Dependent on a certain user profile the connections 807 can be selected by a connection controlling device 813 in order to select the group of mediation sub-devices 407, 504, 604, 801, 802 for combining the functionalities of the relevant mediation sub-devices 407, 504, 604, 801, 802. By this combination an access functionality to a certain end user 202, 303, 306, 402, 502, 602 connected to the access network can be provided. For selecting the relevant mediation sub-devices the database 808 can be used.

The connection controlling device 813 is adapted or configured to determine a profile of an user and to connect mediation sub-devices 407, 504, 604, 801, 802 accordingly.

The mediation device 406 can be administrated by the administration device 809, which may allow an administrator to access the mediation device by XML functionalities. The operation-and-maintenance device 810 or element manager 810 allows to provide performance and operation and maintenance functionality to an administrator. For example the SNMP protocol can be used. A service provider may be connected by a control connection using the DHCP interface 607, the L2TP interface 505 or the RADIUS interface 109. At the DHCP interface 109 a DHCP server.

The high layer controlling device 803 handles the transport from and to the access network 700 and the high layer controlling device 804 handles the transport from and to the core or service provider network 408, 509, 606. The RADIUS connection 109 to the corresponding AAA-server, the DHCP connection 607 to the DHCP client or DHCP server and the L2TP connection 505 to the corresponding LNS may be seen as a control interface and a control connection terminated inside the mediation device 406. Dependent on the control connections 109, 607, 505 the inter-working between the low layer controlling device 803 and the high layer controlling device 804 is controlled.

Typical access networks 308, 404, 515, 605, 700 provide layer 2 (Ethernet) or layer 3 (IP) connectivity. The access transport may be given by a single WiMax base station. The access provider network 308, 404, 515, 605, 700 may also be connected via interface 806 to a service provider network 408, 509, 606 through a routed layer 3 IP network. I.e. the mediation device has interface modules 805, 806 for the uplink of the core traffic 806 and the downlink of the access traffic 805.

Any configuration of the mediation device 406, the selection of mediation sub-devices 604, 802, 801, 407, 504, and host-specific parameters can be administrated by standard admin interfaces 811 e.g. based on XML. An according admin interface module 809 allows the access for administration purposes.

Alarming and performance measurement data can be sent via OAM (operation and maintenance) module 810, e.g. an element manager via an SNMP interface 812.

The AAA-server 802 may allow local authentication. The AAA-server 802 also can act as AAA-proxy, which supports the AAA-server of a service provider or remote AAA server. Furthermore, the mediation device 406 may also act as L2TP tunneling end point resolver, in order to tunnel traffic by an L2TP tunnel. Such a local L2TP end point can be handled by the LAC sub-function 504.

The mediation device 406 or ACMB 406 may also comprise a BRAS 407 for local termination of authentication and accounting connections and information. In order to provide a portal-based access for example for a mobile user, the mediation device 406 also comprises the access gateway 801. The access gateway 801 may send a portal page or a log-in page, wherein a mobile user or flyby user can provide data on, which data accounting can be performed. A mobile user or a flyby user is a user who is not registered by service provider for using a certain service.

The mediation device 406 also comprises a DHCP relay 604 sub-device, which allows to manipulate a DHCP traffic such, that an identity feed-in according to DHCP option 82 can be performed.

The mediation device 406 can be used to mediate or to convert between the technology of an access network 700 and technology used in a service provider network 408, 509, 606.

The mediation device 406 may be accessed by different administrators. Each administrator may configure individual users or hosts or groups of users by configuring a user profile. The user profile determines for an individual user or a group of users how the inter-working between the access network 700 and the service provider network 408, 509 and 606 should be carried out. Thus, individual requirements for certain users or user groups can be supported by the mediation device 406. I.e. per administrator the mediation device 406 allows an individual configuration per user or host 202, 303, 306, 402, 502, 602 or group wise for user groups or hosts. The configuration determines, how the inter-working is carried out or made per user, per user group, per device or per device group.

In other words, if a user 202, 303, 306, 402, 502, 602 of a service provider, e.g. an ISP, is served, the AAA-server of the ISP may be registered in the local AAA-server 802 of the mediation device. Thus, the BRAS 407 on the mediation device 406 terminates the PPP session received from the host via the access network 700. The mediation device uses the information received by the PPP connection to contact the AAA-server of the service provider via the local AAA-server 802.

In the case the mediation device 406 is used for a user 402, 502 connected to a DSL network, DSL operator or DSL provider 402, 509 the mediation device 406 installs an L2TP tunnel via the L2TP interface 505 to the BRAS 508 of the DSL service provider. The local AAA-server 802 in that case detects that the local BRAS mediation sub-device 407 does not have to terminate the PPP connection and the received PPP connection is diverted via the L2TP tunnel to the DSL service provider. The address of a target BRAS 508 for the L2TP tunnel is configured in the mediation device as part of the user profile or user / host related setup data.

In a cable TV scenario, wherein a host 602 is connected to a cable TV network 606 the mediation device 406 detects the DHCP requests from the user 602. The mediation device 406 determines the user profile of the cable TV user 602 and uses the DHCP relay sub-device 604 in order to insert a unique credential in the DHCP control traffic. For example a unique credential such as a line ID or a MAC address may be fed into the DHCP message using option 82. The DHCP control traffic is relayed to a DHCP server. Optionally an access gateway 801 may be engaged in a way that the user traffic of the IP address assigned to the host 602 is no longer blocked by the access gateway 801. A bidirectional communication between the host 602 and the application server is then possible.

The user traffic and user authentication may optionally also be handled completely in the mediation device 406. In this case user or user profiles including the credentials are administrated in the AAA-server 802. The local BRAS sub-device 407 can request the local AAA-server 802 to carry out authentication locally.

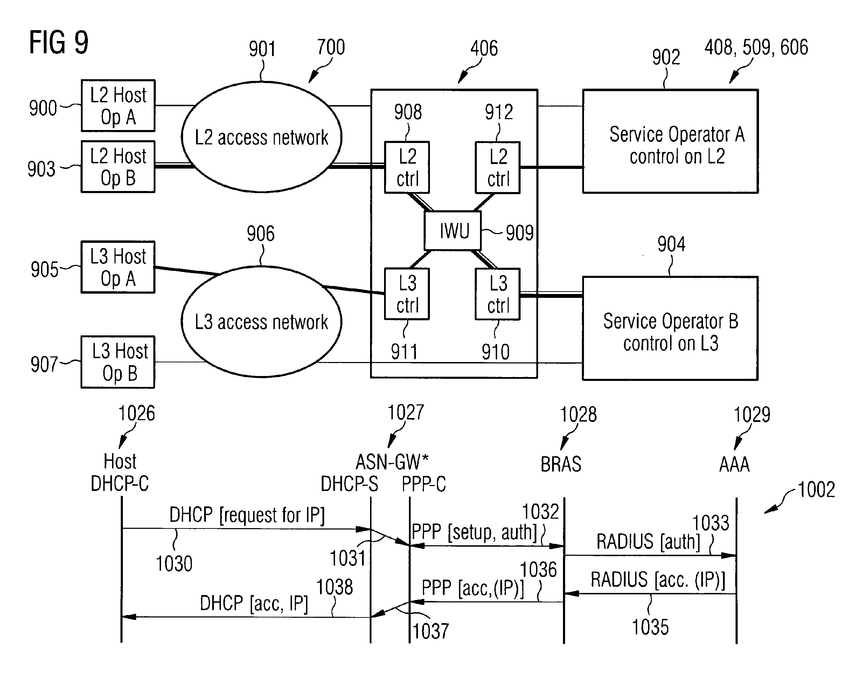

All administration data is stored in the local database 808. Fig. 9 shows a mediation device 406 connecting a low layer access network 901 and a high layer access network 906 to a low layer service provider network 902 and a high layer service provider network 904 according to an exemplary embodiment of the present invention.

The access network 700 of an access provider network may be an access network, which operates based on layer 2 or may be a network, which operates based on layer 3. Examples for access networks which operate on layer 2 is an Ethernet network or a WiMax network IEEE 802.16e with an Ethernet convergence layer ETH-CS. Examples for networks which operate on a layer 3 are IP networks, or WiMax networks IEEE 802.16e with an IP convergence layer IP-CS.

A layer 2 controlling may be a host, which uses a PPPoE connection to a BRAS. A layer 3 control connection may be a host which uses an IP connection with DHCP commands. An access provider may have to be adaptive on the control layer in order to offer a flexible connectivity to other networks. In other words, an access network operator has to flexibly adapt the access network to the control layer used by the service provider network 408, 509, 606 to be accepted by users as an access service provider. E.g. a layer 3 service provider expects control signals on layer 3, a layer 2 service provider expects to receive layer 2 control information. A layer 3 service provider and a layer 2 service provider may have to be served by the access service provider at the same time. For example a service network operator, which owns a BRAS expects to receive PPPoE or layer 2 control information. A service network provider, which deploys a DHCP server expects to receive DHCP signals or layer 3 control information. The mediation device 406 or layer conversions module (LCM) allows to convert between different control layers.

Different scenarios for the conversion are depicted in Fig. 9. Fig. 9 shows four different hosts 900, 903, 905, 907. Host 900 is a host, which operates on a layer 2 access network 901 and which wants accessing the service provider network 902, which service provider network is also controlled on layer 2. The layer 2 operator is called operator A.

The host 903 is a host, which operates on the layer 2 access network 901 and wants to reach service operator B 904. Service operator B 904 operates a service provider network 904, which is controlled on layer 3.

Host 905 is a host which is connected to a layer 3 access network 906 and this host 905 wants to access the layer 2 service provider network 902 of operator A.

The host 907 is connected to the layer 3 access network 906 and wants to access the service provider network 904 of operator B.

In the following the abbreviations L2 A for a layer 2 host accessing the layer 2 network of operator A, L2 B for a layer 2 host accessing the layer 3 network of operator B, L3 A for a layer 3 host accessing the layer 2 network of operator A and L3 B for a layer 3 host accessing the layer 3 network of operator B are used.

Since host L2 A 900 uses layer 2 control protocols and wants to access the service provider network A 902, which network A also operates on layer 2 the control traffic has not to be converted by the mediation device 406. The mediation device 406 is connected between layer 2 access network A 901 and layer 2 service provider network A 902.

Since host L3 B 907 uses layer 3 control information and wants to access the layer 3 controlled service provider network B 904, the mediation device 406 also does not have to convert the signals in order to allow host L3 B 907 access to the service provider network B 904. The mediation device 406 is connected between the layer 3 access network 906 and the layer 3 service provider network B 904.

In order to allow layer 2 host L2 B 903, which is connected to the layer 2 access network 901 access to the service provider network B 904, the mediation device 406 has to convert the user traffic. Therefore, the layer 2 control connection is terminated on the mediation device 406 on the low layer controlling device 908. The traffic terminated by the low layer controlling device 908 or layer 2 controlling device 908 is sent to the inter-working unit 909.

The inter-working unit converts the low layer controlling information received by the low layer controlling device 908 into high layer controlling information for the high layer controlling device 910 or layer 3 controlling device 910. After converting the low layer controlling information into high layer controlling information, the high layer service provider network 904 can be accessed.

The L3 A host 905 is connected to the high layer or layer 3 access network 906. Thus, the host L3 A 905 uses high layer controlling information or layer 3 information, which is terminated in the mediation device 406 on the high layer controlling device 911. The controlling information received by the high layer controlling device 911 or layer 3 controlling device 911 is sent to the inter-working unit 909.

The inter-working unit 909 recognizes that high layer information is provided and converts the high layer information in low layer controlling signals. The low layer control signals are sent to the low layer controlling device 912 or layer 2 controlling device 912. The low layer controlling device 912 sends the converted controlling information to the service provider network A 902 which also operates on low layer controlling information. Thus, an inter-working can take place between host L3A 905 and service provider network 902 which are based on different controlling protocols.

In other words, if a layer 3 access network 906 is connected to a layer 3 service network 904, a layer 3 host 907 can be connected via the layer 3 access network 906 to layer 3 service network without making any adaptation by the mediation device 406.

Similar in a case where a layer 2 access and a layer 2 host 900 to the layer 2 service operator network 902.

The mediation device 406 has to apply an inter-working function or mediation function in the case that the access network 901, 906 and the service network 902, 904 operate on different controlling layers. In those cases, hosts 903, 905 use the inter-working functionality provided by the mediation device 406.

Deploying a mediation device 406 allows for example to adapt a WiMax-based access network to different local service provider networks. The adaptation of the WiMax-based access network to the service provider network may be done automatically. Automatically in this context means that the mediation device 406 recognizes that networks have to be connected, which are controlled on different layers. The mediation device then automatically selects the right low layer controlling device 908, 912 or high layer controlling device 911, 910 to convert the relevant controlling signals.

Thus, a mediation device may allow operating a layer 2 901 or a layer 3 906 based access network together with a layer 2 902 or layer 3 904 service provider network. The mediation device 406 makes the access network transparent for the relevant service provider network 902, 904 by hiding access specific functions or controlling. Therefore, deficiencies of a wireless access may be hidden. Hiding access functionality may increase the acceptance as an access provider.

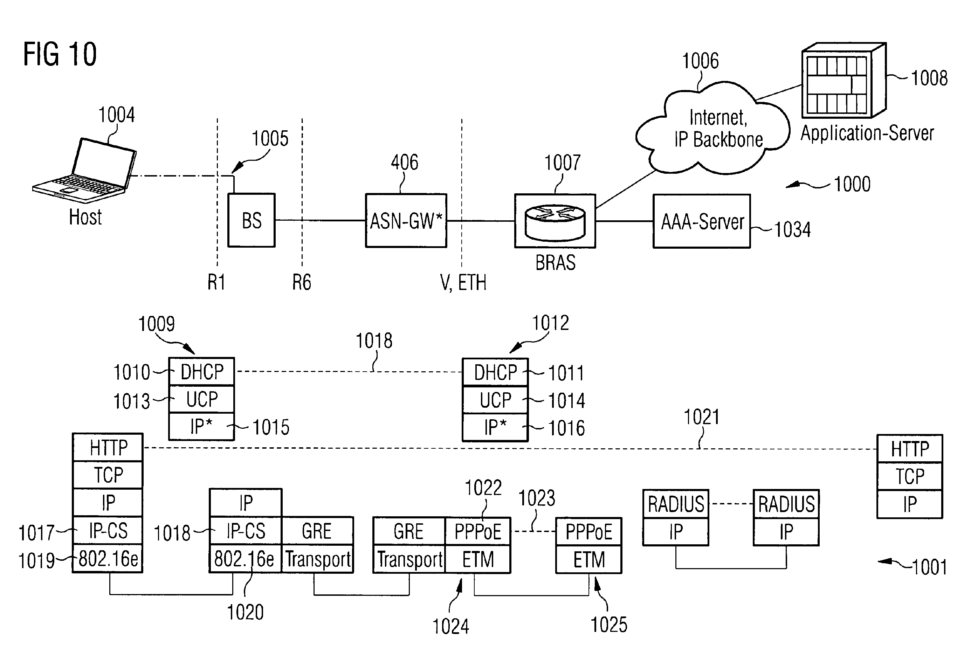

Fig. 10 shows a mediation device converting low layer controlling information into high layer controlling information according to an exemplary embodiment of the present invention. Fig. 10 shows a network topology 1000, the relevant protocol stack diagram 1001 and a message flow diagram 1002. In the network topology diagram 1000 a layer 3 host 1004 is connected to a layer 3 access network 1005. The layer 3 network in Fig. 10 is a WiMax base station which is connected to the mediation device 406. Host 1004 wants to access the application server 1008 connected to an IP backbone 1006.

The IP backbone 1006 is connected to a BRAS 1007. In order to operate correctly, the BRAS 1007 needs a PPPoE information from the access network. A PPPoE connection is a layer 2 connection. Thus, in order to connect the layer 3 host 1004 via the layer 3 network 1005 to the BRAS 1007 the mediation device 406 has to convert the layer 3 control information to the layer 2 control information. For the layer 3 control a DHCP connection 1008 is established between the host 1004 and the mediation device 406. On the host 1004 a protocol stack 1009 is implemented for sending layer 3 controlling information. The DHCP layer 1010 is terminated by the DHCP layer 1011 of the protocol stack 1012 in the mediation device 406. The DHCP connection 1008 is based on UDP 1013, 1014 and on a broadcast IP connection 1015, 1016. The broadcast IP connection, i.e. sending IP packets with a broadcast IP address, has to be used since no IP address is allocated.

The layer 3 control information is transported over the IP convergence layer 1017, 1018 and the MAC layer IEEE 802.16e 1019, 1020.

The IP convergence layer 1017 is also used for the main end-to-end HTTP connection 1021, the HTTP connection subsequently being established between the host 1004 and the application server 1008 for payload exchange.

For the establishment of the main HTTP connection 1021 a controlling communication between the host 1004 and the BRAS 1007 has to be established. However, since the host 1004 uses DHCP on layer 3 and the BRAS uses PPPoE on layer 2 the BRAS can not be directly controlled by the host 1004. In order to control the BRAS 1007 by the host the mediation device 406 terminates the DHCP connection 1008 with the protocol stack 1012. An inter-working unit (IWU) 909 or inter-working device 909 inside the mediation device 406 converts the DHCP controlling information 1011 into corresponding PPPoE controlling information 1022. The PPPoE information gathered by the inter-working device is used for the PPPoE connection 1023 between the mediation device 406 and the BRAS 1007.

The PPPoE protocol stack 1024 is implemented on the mediation device in addition to the DHCP protocol stack 1012. On the BRAS the protocol stack 1025 is implemented in order to communicate with the protocol stack 1024 of the mediation device 406.

The inter-working between the high layer control information and low layer control information can be seen in the message flow diagram 1002. The message flow diagram 1002 shows the position of the host 1026, the position of the mediation device 1027, the position of the BRAS 1028 and the position of the AAA-server 1029.

The host 1004 and in particular the DHCP client (DHCP-C) on the host sends a DHCP request 1030 to the DHCP server (DHCP-S) on the mediation device 406, 1027 or ASN-GW 406, 1027 requesting an IP address. The high/low layer inter-working device of the mediation device 406 converts the DHCP layer 3 command into PPP layer 2 commands as depicted with arrow 1031. The PPP client (PPP-C) of the mediation device 406 sends a PPP setup request 1032 to the BRAS 1007, 1028 of the service provider. The BRAS 1007 reacts to the PPP request 1032 by sending a RADIUS authentication request 1033 to the AAA-server 1029, 1034. The AAA-server 1029, 1034 replies with a RADIUS acknowledge 1035 or RADIUS accept 1035, which is received by the BRAS 1028, 1007.

The DHCP-S is part of the high layer controlling device 804. The PPP-C is part of the low layer controlling device 803.

The BRAS 1007, 1028 replies to the PPP setup request 1032 with a PPP acknowledge 1036 or PPP accept 1036 including the allocated IP address. The PPP acknowledge 1036 is received by the PPP client on the mediation device 1027, 406 and the inter-working device on the mediation device 406 converts the layer 2 PPP acknowledge information including the IP address into a layer 3 DHCP acknowledge message including the IP address 1038. The conversion inside the inter-working unit of the mediation device 406 is shown as arrow 1037.

The DHCP acknowledge message including the IP address 1038 is received by the DHCP client on the host 1004, 1026. Once the host received the IP address included in the DHCP acknowledge message 1038 or DHCP acceptance message 1038, the host can use the received IP address to establish the HTTP payload connection 1021 to the application server 1008.

Using the inter-working functionality of the mediation device 406 the layer 3 controlling information 1030 can be converted to layer 2 controlling information 1032. In a similar way also the adaptation of a layer 2 access network to a layer 3 service network can be realized.

Thus, the access network is transparent for a service provider network. In other words, a WiMax system based on IEEE 802.16e with IP convergence sub-layer (layer 3 access network) shall give access to hosts of a DSL service provider, the service provider using a layer 2 service network. The DSL operator expects host controlled signaling on layer 2, e.g. PPPoE. However, the access network is only capable to transport payload on top of layer 3 (IP). Running the DHCP protocol is a typical mechanical in order to provide layer 3 host control signaling or a network control signaling. DHCP runs on the top of UDP (user data protocol). UDP is based on IP. DHCP is for example used to assign an IP address to a host. As long as the host does not have an assigned valid or allocated IP address the host uses a broadcast IP address, which is designated as IP*.

The DSL service provider expects that the host sets up a PPP connection to the BRAS. As part of the PPP dialog between host and BRAS the host is authenticated and the BRAS will assign a valid IP address to the host. Thus, the mediation device 406, layer convergence module 406 act as a PPP client towards the BRAS and as a DHCP server towards the host.

A host 1004 using a layer 3 protocol, e.g. IP, needs an IP address to establish a connection to an application server 1008. If the host 1004 wants to setup a HTTP connection and realizes that the host does not have an IP address, the host requests an IP address. In order to receive an IP address the host 1004 sends a DHCP request 1030 to the access network 700, 1005. The host expects a DHCP acknowledge on layer 3 from a DHCP server as an answer to the DHCP request 1030 on layer 3.

The DHCP server located on the mediation device 406 receives the DHCP request 1030. The DHCP server on the mediation device terminates the DHCP connection and sets up a PPP connection to the remote BRAS 1007, 1028. The PPP client located on the mediation device 406, 1027 acts as a host or user towards the BRAS, the host sending a pre-configured credential, e.g. user name or password to the BRAS 1028. The remote BRAS 1028, 1007 receives the credential and verifies the credential with the user profile stored in a AAA-server. For the verification the BRAS 1028, 1007 communicates with the AAA-server 1029, 1034 by using the RADIUS protocol.

If the user is successfully authenticated, the remote BRAS 1007, 1028 replies with a PPP message 1036, the PPP message containing the accept message and the IP address, which is assigned to the host. Since the PPP client simulates the host, the IP address is assigned to the PPP client located on the mediation device 406, 1027. The mediation device 406, 1027 extracts the assigned IP address and sends the assigned IP address to the host using DHCP accept message 1038. The DHCP accept message is the expected answer to the DHCP request 1030 sent by the host.

The mediation device 406, the LCM 406 or ASN-GW 406 acts as a DHCP server for the layer 3 host and at the same time the mediation device 406 acts as a PPP client for the layer 2 BRAS.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. Mediation device (406) for adapting a first connection to a second connection in a communication network, the mediation device (406) comprising:
a plurality of mediation sub-devices (407, 504, 604, 801, 802, 803, 804);
a connection device (807);
wherein each of the plurality of mediation sub-devices (407, 504, 604, 801, 802, 803, 804) is adapted to provide a corresponding mediation sub-functionality;
wherein the connection device (807) is adapted to select at least two mediation sub-devices from the plurality of mediation sub-devices (407, 504, 604, 801, 802, 803, 804) by connecting the at least two mediation sub-devices (407, 504, 604, 801, 802, 803, 804) such, that the mediation sub-functionalities of the selected at least two mediation sub-devices (407, 504, 604, 801, 802, 803, 804) are combined; and
wherein the connection device (604) is adapted to select the at least two mediation sub-devices such, that the combination of the mediation sub-functionalities provides a desired adaptation between the first connection and the second connection.

2. The mediation device (604) of claim 1, wherein each mediation sub-device (407, 504, 604, 801, 802, 803, 804) of the plurality of mediation sub-devices (407, 504, 604, 801, 802) is selected from the group of mediation sub-devices consisting of a high layer controlling device (804, 911, 910), a low layer controlling device (803, 908, 912), a high-/low-layer inter-working device (909), a broadband remote access server (407), an AAA server (801), an L2TP access concentrator (504), a DHCP relay (604), a DHCP server, an access gateway (801), a service selection gateway, a radius proxy and a webserver.

3. The mediation device (604) of claim 1 or claim 2,
wherein the adaptation between the first connection and the second connection depends on a profile of an user (202, 303, 306, 402, 502, 602), which user (202, 303, 306, 402, 502, 602) is connected to the first connection.

4. The mediation device (604) of one of the claims 1 to 3, further comprising:
a first interface (704, 805);
wherein the first interface (704, 805) comprises the first connection;
wherein the adaptation between the first connection and the second connection depends on the type of the first network (700), which first network is connected to the first interface (704, 805).

5. The mediation device (604) of one of the claims 1 to 4, further comprising:
a second interface (701, 702, 703, 806);
wherein the second interface (701, 702, 703, 806) comprises the second connection;
wherein the adaptation between the first connection and the second connection depends on the type of the second network (408, 509, 606), which second network is connected to the second interface (701, 702, 703, 806).

6. The mediation device (406) of one of the claims 1 to 5,
wherein the connection device (807) is a programmable connection device.

7. The mediation device (406) of one of the claims 3 to 6, the mediation device further comprising:
a connection controller device (813);
wherein the connection controller device is adapted to determine the profile of the user; and
wherein the connection controller device is adapted to control the selection of the at least two mediation sub-devices (407, 504, 604, 801, 802, 803, 804) depending on the determined profile of the user (202, 303, 306, 402, 502, 602).

8. The mediation device (406) of one of the claims 1 to 5,
wherein the connection device (807) is a hardwire connection.

9. The mediation device (406) of one of the claims 1 to 8,
wherein the connection device (807) is adapted to maintain a plurality of different selections of mediation sub-devices (407, 504, 604, 801, 802, 803, 804) at the same time.

10. The mediation device (406) of one of the claims 1 to 9, further comprising:
a first interface module;
wherein the first interface module comprises the first interface (704, 805).

11. The mediation device (406) of one of the claims 1 to 10, further comprising:
a second interface module;
wherein the second interface module comprises the second interface (701, 702, 703, 806).

12. The mediation device (406) of one of the claims 1 to 11, the mediation device (406) further comprising:
a database device (808);
wherein the database device (808) is adapted to provide an information for each of the plurality of mediation sub-devices (407, 504, 604, 801, 802, 803, 804).

13. The mediation device (406) of one of the claims 1 to 12, the mediation device (406) further comprising:
an administration device (809);
wherein the administration device (809) is adapted to provide administrational access to the mediation device (406).

14. The mediation device (406) of one of the claims 1 to 13, the mediation device further comprising:
an operation-and-maintenance-device (810);
wherein the operation-and-maintenance-device (810) is adapted to provide access to an operation and maintenance functionality of the mediation device (406).

15. The mediation device (406) of one of the claims 3 to 14,
wherein the mediation device (406) is adapted to handle a range of 1 to 1 million user profiles.

16. The mediation device (406) of one of the claims 1 to 15, wherein the plurality of mediation sub-devices comprise:
a high layer controlling device (806, 910, 911);
a low layer controlling device (803, 908, 912);
a high-/low-layer inter-working device (909);
a broadband remote access server (407);
an AAA server (802);
an L2TP access concentrator (504);
a DHCP relay (604);
an access gateway (801).

17. The mediation device (406) of one of the claims 1 to 15,
wherein the plurality of mediation sub-devices comprises:
a high layer controlling device (804, 910, 911);
a low layer controlling device (803, 908, 912);
a high-/low-layer inter-working device (909);
wherein the high layer controlling device (804, 910, 911) is adapted to terminate a high layer control connection;
wherein the low layer controlling device (803, 908, 912) is adapted to terminate a low layer control connection;
wherein the high layer control connection is a control connection, which uses commands of a higher network layer than the low layer control connection;
wherein the high-/low-layer inter-working device (909) is adapted to convert between the high layer control connection und the low layer control connection.

18. The mediation device (406) of claim 17,
wherein the conversion between the high layer control connection and the low layer control connection is a mapping of a high layer control command to a low layer control command.

19. The mediation device (406) of claim 17 or claim 18,
wherein the high layer control connection is a layer 3 control connection.

20. The mediation device (406) of one of the claims 17 to 19,
wherein the low layer control connection is a layer 2 control connection.

21. The mediation device (406) of one of the claims 17 to 20,
wherein the high layer control connection is a DHCP connection.

22. The mediation device (406) of one of the claims 17 to 21,
wherein the low layer control connection is a PPPoE connection.

23. The mediation device (406) of one of the claims 1 to 22, the mediation
device further comprising:
a single chassis (800);
wherein the single chassis (800) encloses the devices (407, 504, 604, 801, 802, 803, 804, 808, 809, 810), which are comprised by the mediation device.

24. Wireless broadband access base station (315) comprising the mediation device (406) according to one of the claims 1 to 23.

25. DSLAM (106) comprising the mediation device (406) according to one of the claims 1 to 23.

26. Cable modem termination system comprising the mediation device according to one of the claims 1 to 23.

27. Method for adapting a first connection to a second connection in a communication network using a mediation device (406), wherein the mediation device comprises:
a plurality of mediation sub-devices (407, 504, 604, 801, 802, 803, 804);
a connection device (807);
wherein each of the plurality of mediation sub-devices (407, 504, 604, 801, 802, 803, 804) is adapted to provide a corresponding mediation sub-functionality;
wherein the method comprises:
selecting at least two mediation sub-devices from the plurality of mediation sub-devices by connecting the at least two mediation sub-devices (407, 504, 604, 801, 802, 803, 804) such, that the mediation sub-functionalities of the selected at least two mediation sub-devices (407, 504, 604, 801, 802, 803, 804) are combined; and
selecting the at least two mediation sub-devices (407, 504, 604, 801, 802, 803, 804) such, that the combination of the mediation sub-functionalities provides a desired adaptation between the first connection and the second connection.

28. The method of claim 27, wherein each mediation sub-device (407, 504, 604, 801, 802, 803, 804) of the plurality of mediation sub-devices (407, 504, 604, 801, 802, 803, 804) is selected from the group of mediation sub-devices consisting of a high layer controlling device (804, 911, 910), a low layer controlling device (803, 908, 912), a high-/low-layer inter-working device (909), a broadband remote access server (407), an AAA server (801), a L2TP access concentrator (504), DHCP relay (604), a DHCP server, an access gateway (801), a service selection gateway, a radius proxy and a webserver.

29. The method of claim 27 or claim 28,
wherein the adaptation between the first connection and the second connection depends on a profile of an user (202, 303, 306, 402, 502, 602), which user (202, 303, 306, 402, 502, 602) is connected to the first connection.

30. The method of one of the claims 27 to 29, wherein the mediation device (406) further comprises:
a first interface(704, 805);
wherein the first interface (704, 805) comprises the first connection;
wherein the adaptation between the first connection and the second connection depends on the type of the first network (700), which first network is connected to the first interface (704, 805).

31. The method of one of the claims 27 to 30, wherein the mediation device further comprises:
a second interface (701, 702, 703, 806);
wherein the second interface (701, 702, 703, 806) comprises the second connection;
wherein the adaptation between the first connection and the second connection depends on the type of the second network(408, 509, 606), which second network (408, 509, 606) is connected to the second interface (701, 702, 703, 806).

32. The method of one of the claims 27 to 31,
wherein the connection device (807) is a programmable connection device.

33. The method of one of the claims 29 to 32, the mediation device further comprising:
a connection controller device;
the method further comprising:
determine the profile of the user by the connection controlling device; and
controlling the selection of the at least two mediation sub-devices (407, 504, 604, 801, 802, 803, 804) depending on the determined profile of the user(202, 303, 306, 402, 502, 602).

34. The method of one of the claims 27 to 31,
wherein the connection device (807) is a hardwire connection.

35. The method of one of the claims 27 to 34,
wherein the plurality of mediation sub-devices comprise:
a high layer controlling device (806, 910, 911);
a low layer controlling device (803, 908, 912);
a high-/low-layer inter-working device (909);
a broadband remote access server (407);
an AAA server (802);
an L2TP access concentrator (504);
a DHCP relay (604);
an access gateway (801).

36. The method of one of the claims 27 to 34,
wherein the plurality of mediation sub-devices (407, 504, 604, 801, 802, 803, 804) comprises:
a high layer controlling device (804, 910, 911);
a low layer controlling device (803, 908, 912);
a high-/low-layer inter-working device (909);
wherein the method comprises:
terminating a high layer control connection by the high layer controlling device (804, 910, 911);
terminating a low layer control connection by the low layer controlling device (803, 908, 912);
wherein the high layer control connection is a control connection, which uses commands of a higher network layer than the low layer control connection;
wherein the high-/low-layer inter-working device (909) is adapted to convert between the high layer control connection und the low layer control connection.

37. The method of claim 36, the method further comprising:
converting between the high layer control connection and the low layer control connection by mapping a high layer control command to a low layer control command.
